# EUROPÄISCHE PATENTSCHRIFT

(11) **EP 0 518 202 B1**
(45) Veröffentlichungstag und Bekanntmachung des Hinweises auf die Patenterteilung: **05.04.1995**
(21) Anmeldenummer: 92109385.2
(22) Anmeldetag: 03.06.1992
(51) Int. Cl.: G01G 21/24, G01G 7/02

(54) **Vorrichtung zur Kraftuntersetzung in einer Kraftmesseinrichtung, insbesondere einer Waage**
Device for reducing the force in a force measuring device, particularly in a weighing apparatus
Dispositif pour réduire la force dans un appareil de mesure de force, en particulier dans une balance

(30) Priorität: 14.06.1991 DE 4119734
(43) Veröffentlichungstag der Anmeldung: 16.12.1992
(73) Patentinhaber: Mettler-Toledo AG, 8606 Greifensee (CH)
(72) Erfinder: Hungerbühler, Ernst, CH-8320 Fehraltorf (CH); Burkhard, Hans Rudolf, CH-8603 Schwerzenbach (CH)
(74) Vertreter: Patentanwälte Leinweber & Zimmermann

(56) Entgegenhaltungen:
- EP-A- 0 291 258
- EP-A- 0 369 136
- EP-A- 0 393 323
- PATENT ABSTRACTS OF JAPAN vol. 14, no. 349 (P-1084)(4292) 27. Juli 1990 & JP-A-21 24 433

## Beschreibung

Die Erfindung bezieht sich auf eine Vorrichtung zur Kraftuntersetzung in einer Kraftmeßeinrichtung, insbesondere einer Waage, mit mindestens einem an einem Ständer abgestützten, der Kraftuntersetzung dienenden starren Hebel und mindestens einer längssteifen, biegeelastischen Koppel, wobei der Ständer, der Hebel und die Koppel von Materialbereichen eines einstückigen Materialblocks gebildet sind, die durch von den Materialblock senkrecht zur Drehebene des Hebels durchsetzenden Ausnehmungen gebildete materialfreie Bereiche begrenzt sind und von denen der den Hebel bildende Materialbereich mit dem den Ständer bildenden Materialbereich nur an einer in dem Materialblock ausgebildeten, die Abstützstelle bildenden Biegestelle und der die Koppel bildende Materialbereich mit dem den Hebel bildenden Materialbereich nur an einer in dem Materialblock ausgebildeten lokalisierten Angriffsstelle zusammenhängt.

Der Zweck derartiger Kraftuntersetzungsvorrichtungen besteht darin, die von der Kraftmeßeinrichtung zu messende Eingangskraft, beispielsweise die Gewichtskraft einer hochbelastbaren Waage, so weit zu untersetzen, daß die durch die Kraftuntersetzung gewonnene Kraft an den verfügbaren Belastungsbereich einer zur Bildung eines Meßsignals dienenden Kraftmeßzelle angepaßt ist. Beispiele für derartige Kraftmeßzellen sind eine Kraftmeßzelle mit schwingender Saite, eine piezoelektrische Kraftmeßzelle oder eine Kraftmeßzelle mit elektromagnetischer Kraftkompensation. Sofern das erforderliche Übersetzungsverhältnis verhältnismäßig klein ist, reicht es dabei aus, daß die Vorrichtung nur einen einzigen der Kraftuntersetzung dienenden Hebel aufweist. Für hohe Kräfte bzw. große Eingangsgewichte werden jedoch Vorrichtungen mit zwei, drei und sogar mehr Hebeln, die alle hintereinandergeschaltet sind, benötigt.

Bekannte Vorrichtungen der eingangs genannten Art (EP-A2-29/258), die zumeist nicht nur in sich einstückig, sondern gleichzeitig auch einstückig mit einer Parallelführung für ein der Krafteinleitung der zu messenden Kraft in die Koppel des Hebels dienendes Krafteinleitungsteil ausgebildet sind, sind vor allem deswegen vorteilhaft, weil durch die einstückige Ausbildung alle Montagevorgänge für die gegenseitige Verbindung der einzelnen Teile untereinander mittels getrennt ausgebildeter Biegestellen entfallen. Ferner sind wegen der einstückigen Ausbildung die Materialeigenschaften an allen Stellen der Vorrichtung gleich, so daß durch unterschiedliche Materialeigenschaften hervorgerufene Fehler entfallen.

Die den Ständer, den Hebel und die Koppel bildenden Materialbereiche voneinander trennenden materialfreien Bereiche sind bei den bekannten Vorrichtungen in der Drehebene des Hebels gesehen verhältnismäßig breit ausgebildet, so daß zwischen diesen Teilen verhältnismäßig große freie Abstände bestehen. Insbesondere sind bei den bekannten Vorrichtungen die die Abstützstellen der Hebel bildenden Biegestellen und die Angriffsstellen der Koppeln durch in dem Materialblock ausgebildete Bohrungen abgegrenzt, wobei diese Bohrungen je paarweise nebeneinander angeordnet sind und zwischen sich eine Dünnstelle des Materialblocks stehen lassen, welche jeweils die Abstützstelle bzw. Angriffsstelle bildet. Die verhältnismäßig breiten materialfreien Bereiche und insbesondere die die Dünnstellen begrenzenden Bohrungen führen bei den bekannten Vorrichtungen jedoch gerade auch dort eine Materialschwächung herbei, wo die durch diese materialfreien Bereiche begrenzten Materialbereiche besonders stark kraftbelastet sind. Wenn die räumlichen Dimensionen des Materialblocks vorgegeben sind, wirkt sich also die bei den bekannten Vorrichtungen herrschende Formgebung der materialfreien Bereiche nachteilhaft auf die gesamte Festigkeit und Belastbarkeit der Vorrichtung und damit auch auf die erzielbare Auflösung und Genauigkeit aus. Werden dagegen die betreffenden Materialbereiche den Anforderungen entsprechend kräftig dimensioniert, so steigt das gesamte Bauvolumen der Vorrichtung entsprechend an, wobei dieser unerwünschte Anstieg des Bauvolumens zumindest teilweise durch das die einzelnen Materialbereiche voneinander abgrenzende materialfreie Volumen des Materialblocks verursacht ist. Da bei den bekannten Vorrichtungen im wesentlichen nur der Formgebung der die Teile der Kraftuntersetzung bildenden Materialbereiche Aufmerksamkeit geschenkt wird, während die Form der die Materialbereiche abgrenzenden materialfreien Bereiche keiner Beachtung unterzogen wird, werden entweder ein optimal kleines Bauvolumen oder eine optimal hohe Festigkeit nicht erreicht.

Der Erfindung liegt die Aufgabe zugrunde, eine Vorrichtung der eingangs genannten Art zu schaffen, deren Festigkeit und Belastbarkeit bei möglichst kleinem Bauvolumen möglichst groß ist.

Erfindungsgemäß wird diese Aufgabe dadurch gelöst, daß die materialfreien Bereiche zumindest in ihren längs der von der zu untersetzenden Kraft am stärksten belasteten Zonen der zusammenhängenden Materialbereiche sich erstreckenden Abschnitten jeweils nur durch eine den Materialblock durchtrennende dünne Schnittlinie gebildet sind.

Bei der erfindungsgemäßen Ausbildung der Vorrichtung wird also nicht nur eine zweckentsprechende Formgebung der die notwendigen Teile der Kraftuntersetzung bildenden Materialbereiche vorgesehen, sondern gleichzeitig auch die Formgebung der die Materialbereiche begrenzenden materialfreien Bereiche derart ausgeführt, daß bei einem minimalen Bauvolumen eine maximale Festigkeit und Belastbarkeit erzielt wird. Insbesondere trägt die erfindungsgemäße Ausgestaltung dem Umstand Rechnung, daß für die starren oder wegarmen Meßsysteme nur sehr geringe Auslenkungen der Teile der Kraftuntersetzung erforderlich sind, so daß die materialfreien Bereiche in der Richtung der Drehebene der Hebel gesehen nur eine sehr kleine Ausdehnung aufweisen müssen. Indem hiervon zumindest in denjenigen Abschnitten der materialfreien Bereiche Gebrauch gemacht wird, die sich längs der am stärksten belasteten Zonen der Materialbereiche, insbesondere der den Hebel und den Ständer bildenden Materialbereiche, erstrecken, ergibt sich an diesen Zonen eine besonders hohe Materialstärke und Belastbarkeit unter gleichzeitiger Einsparung des von der Vorrichtung eingenommenen Bauvolumens. Die diese Abschnitte der materialfreien Bereiche bildenden dünnen Schnittlinien lassen sich insbesondere durch Funkenerodieren besonders dünn ausführen, wobei beispielsweise die Schnittbreite in der Größenordnung von einigen Zehntel Millimetern liegt. In der Praxis lassen sich durch Funkenerodieren derzeit ohne weiteres Breiten zwischen 0,1 und 0,35 mm erzielen, wobei Erstausführungen der Erfindung durch Funkenerodieren mit einer bevorzugten Breite von 0,25 mm hergestellt wurden. Vorzugsweise wird eine Breite von nicht mehr als 1 mm gewählt, wobei die am meisten bevorzugte Breite unter maximal 0,5 mm liegt. Andere Schneidmethoden als die des Funkenerodierens, z. B. unter Verwendung eines Wasserstrahl-Schneidgerätes, können es praktisch erfordern, den oberen Bereich des vorgenannten bevorzugten Breitenbereichs von bis zu 1 mm einzuhalten.
Alternativ können auch andere geeignete Techniken dazu verwendet werden, die dünnen Schnittlinie mit ausreichend geringer Breite und ohne nachteilige Schwächung der von der dünnen Schnittlinie begrenzten Materialbereiche auszubilden. Diejenigen materialfreien Bereiche, die weniger belastete Zonen der zusammenhängenden Materialbereiche begrenzen, können alternativ mit größerer Breite ausgebildet sein. Insbesondere können diese unkritischen Zonen der materialfreien Bereiche in dem einstückigen Materialblock vorgeformt sein, z. B. durch Gießen, Bohren oder andere Schneidverfahren.

Damit läßt sich bei geringem Bauvolumen für Lastbereiche von einigen zehn Kilogramm bis beispielsweise 60 kg eine Auflösung in der Größenordnung von 10⁵ bis 10⁶ erreichen. Durch die geringe Materialwegnahme können ohne weiteres mehrere Hebel hintereinandergeschaltet werden, wobei dem am stärksten belasteten ersten Hebel aus Gründen der Festigkeit ein Übersetzungsverhältnis von weniger als 10 zugrunde gelegt werden kann. Durch zwei oder drei nachgeschaltete weitere Hebel können dann insgesamt Übersetzungsverhältnisse bis zu 10³ bei kleinen Bauvolumina erreicht werden. Sofern dabei am Ausgang, also an dem letzten Hebel, ein gewisser Einschwinghub erwünscht ist, kann der diesen letzten Hebel abgrenzende materialfreie Bereich abweichend von einer dünnen Schnittlinie durchaus breiter ausgeführt werden, weil bei diesem letzten Hebel die Belastungsanforderungen durch die dann schon weitgehend untersetzte Kraft verhältnismäßig gering sind.

Jedenfalls ist durch die Ausbildung der materialfreien Bereiche an den stark belasteten Zonen eine derart kräftige Ausbildung des oder der Hebel und des Ständers sichergestellt, daß keine die Meßgenauigkeit störenden Durchbiegungen auftreten. Gleichzeitig erlaubt insbesondere das Funkenerodieren der dünnen Schnittlinien deren beliebige Verlaufsgestaltung, so daß insbesondere die als Abstützstelle der Hebel dienenden Biegestellen auch abweichend von rein kreislinienförmigen Begrenzungslinien eine optimale Formgebung erfahren können.

Für den Materialblock stehen zahlreiche geeignete Werkstoffe zur Verfügung. Vor allem haben sich Aluminiumlegierungen bei einstückigen Vorrichtungen zur Kraftuntersetzung bewährt. Doch könnte auch beispielsweise Stahl als Werkstoff zur Anwendung kommen.

Eine spezielle Ausführungsform des im Patentanspruch 1 näher definierten Prinzips der minimalen Materialwegnahme in den an die Zonen großer Belastung angrenzenden materialfreien Bereichen besteht darin, daß der den die Koppel und ihre Angriffsstelle am Hebel bildenden Materialbereich von dem den Hebel bildenden Materialbereich trennende materialfreie Bereich in der Form der dünnen Schnittlinie ausgebildet ist. Damit verbleibt für den an die Koppel angrenzenden Hebelarm, der von der mittels der Koppel eingeleiteten Kraft am stärksten beaufschlagt ist, die maximal mögliche Materialstärke bestehen, so daß dieser Hebel gegen eine unerwünschte Durchbiegung bei hoher Belastung geschützt ist. Gleichzeitig kann dabei die sich senkrecht zur Längsachse des Hebels erstreckende Koppel in ihrer senkrecht zur Längsachse gerichteten Längserstreckung auf etwa die Querausdehnung des Hebels beschränkt sein und unmittelbar an den Hebel angrenzend sowie nur durch die dünne Schnittlinie von diesem getrennt angeordnet sein, so daß in der sich senkrecht zur Längsachse des Hebels erstreckenden Richtung nur eine geringe Bauhöhe erforderlich ist.

Der Festigkeit des von der mittels der Koppel eingeleiteten, zu untersetzenden Kraft beaufschlagten Hebelarmes ist es in einer vorteilhaften Weiterbildung ferner sehr dienlich, daß der den den Ständer bildenden Materialbereich von dem den Hebel bildenden Materialbereich trennende materialfreie Bereich mindestens in seinem die Abstützstelle an ihrer zur Koppel weisenden Seite begrenzenden Abschnitt in der Form der dünnen Schnittlinie ausgebildet ist. Hierdurch bleibt für den Hebelarm zwischen der Abstützstelle des Hebels und der Angriffsstelle der Koppel die nur durch die Breite der dünnen Schnittlinie abgegrenzte volle Materiallänge bestehen, so daß der zwischen der Abstützstelle und der Angriffsstelle der Koppel gebildete Hebelarm die größtmögliche Festigkeit aufweist.

Andererseits ist in einer vorteilhaften Ausführungsform auch vorgesehen, daß der den den Hebel bildenden Materialbereich von dem den Ständer bildenden Materialbereich trennende materialfreie Bereich in seinem sich von seinem die Abstützstelle an ihrer zur Koppel weisenden Seite begrenzenden Abschnitt aus zur Angriffsstelle der Koppel erstreckenden Abschnitt in der Form der dünnen Schnittlinie ausgebildet ist. Indem also auch der sich von der Abstützstelle des Hebels zur Angriffsstelle der Koppel erstreckende Abschnitt des materialfreien Bereichs in der Form der dünnen Schnittlinie ausgebildet ist, wird bei vorgegebener Gesamtabmessung der Vorrichtung nicht nur die für den Hebelarm zwischen Koppel und Abstützstelle verfügbare Materialmenge möglichst groß, sondern auch die für den daran angrenzenden Bereich des Ständers verbleibende Materialmenge, so daß auch der die Abstützung des Hebels bewirkende Ständer in seiner Festigkeit günstig beeinflußt wird.

Der Erfindungsgedanke, der sowohl bei Vorrichtungen mit nur einem einzigen kraftuntersetzenden Hebel als auch bei Vorrichtungen mit mehreren derartiger hintereinandergeschalteter Hebel seine Anwendung findet, erstreckt sich im letzteren Falle also insbesondere auch auf eine Vorrichtung, bei der die Koppel eine erste Koppel zur Einleitung der zu untersetzenden Kraft in den Hebel und der Hebel einen ersten Hebel für einen der weiteren Kraftuntersetzung dienenden, dem ersten Hebel nachgeschalteten, starren zweiten Hebel darstellt, wobei diese Ausbildung dann vorteilhaft derart getroffen ist, daß der den den ersten Hebel bildenden Materialbereich an dessen dem zweiten Hebel benachbarter Seite von dem den zweiten Hebel bildenden Materialbereich trennende materialfreie Bereich in der Form der dünnen Schnittlinie ausgebildet ist. Durch diese Ausbildung liegen also der erste und der zweite Hebel in deren Drehebene gesehen unmittelbar nebeneinander und sind nur durch die den trennenden materialfreien Bereich bildende dünne Schnittlinie voneinander beabstandet. Somit bleibt für die senkrecht zu ihrer Längsrichtung gesehene Stärke der beiden Hebel eine größtmögliche Materialmenge verfügbar und wird gleichzeitig die Bauhöhe der Vorrichtung quer zur Längsrichtung der Hebel gesehen auf ein Minimum herabgesetzt.

Eine in diesem Zusammenhang besonders zweckmäßige weitere Ausgestaltung zeichnet sich dadurch aus, daß an dem der Angriffsstelle der ersten Koppel am ersten Hebel jenseits dessen Abstützstelle gegenüberliegenden Ende des den ersten Hebel bildenden Materialbereichs ein davon nur durch einen in der Form der dünnen Schnittlinie ausgebildeten materialfreien Bereich getrennter, eine längssteife, biegeelastische zweite Koppel bildender Materialbereich vorgesehen ist, dessen der Angriffsstelle der zweiten Koppel am ersten Hebel entgegengesetztes Ende an dem am Ständer abgestützten, den zweiten Hebel bildenden Materialbereich angreift. Auch hier ist also wieder durch die Formgebung des die zweite Koppel von dem ersten Hebel trennenden materialfreien Bereichs bei größtmöglichem Erhalt des für die belasteten Teile verfügbaren Materials das Bauvolumen besonders klein, weil die zweite Koppel und der mit der zweiten Koppel verbundene Bereich des ersten Hebels in der Längsrichtung der beiden Hebel gesehen nebeneinander angeordnet und nur durch einen minimal breiten materialfreien Bereich voneinander getrennt sind. Hierdurch wird also nicht nur die Abmessung in der Längsrichtung der beiden Hebel klein gehalten, sondern auch in der dazu senkrechten Richtung, weil die zweite Koppel und der mit ihr verbundene Bereich des ersten Hebels in der zur Längsrichtung senkrechten Richtung nicht übereinander angeordnet, sondern in der Längsrichtung nebeneinander angeordnet sind.

Die Vorteile der räumlichen Kompaktheit und mechanischen Festigkeit sowie auch der wegen der minimalen Materialwegnahme vereinfachten Herstellung werden in diesem Zusammenhang noch dadurch gesteigert, daß der den die zweite Koppel bildenden Materialbereich an dessen dem ersten Hebel abgewandter Seite von dem den Ständer bildenden Materialbereich trennende materialfreie Bereich in der Form der dünnen Schnittlinie ausgebildet ist.

Darüber hinaus besteht eine vorteilhafte Weiterbildung dieser Ausführungsform darin, daß der den den Ständer bildenden Materialbereich von dem den ersten Hebel bildenden Materialbereich trennende materialfreie Bereich in seinem sich von dem die Angriffsstelle der zweiten Koppel an dem ersten Hebel an ihrer zum Ständer weisenden Seite begrenzenden materialfreien Bereich aus erstreckenden Abschnitt in der Form der dünnen Schnittlinie ausgebildet ist. Damit ist also der erste Hebel in seinem mit der zweiten Koppel verbundenen Bereich von dem Ständer nur durch die dünne Schnittlinie getrennt, so daß insbesondere das für den Ständer verfügbare Material nur in der geringstmöglichen Weise geschwächt ist und daher die auch für den Ständer besonders wichtige Festigkeit gefördert wird.

Der Vereinfachung der Herstellung durch minimale Materialwegnahme und der dadurch gleichzeitig erreichten Festigkeitserhöhung ist es ferner dienlich, in Weiterbildung der erfindungsgemäßen Ausführungsformen vorzusehen, daß der den den Ständer bildenden Materialbereich von dem den zweiten Hebel bildenden Materialbereich trennende materialfreie Bereich im Bereich der Abstützstelle des zweiten Hebels jeweils in der Form der dünnen Schnittlinie ausgebildet ist.

Gemäß einem weiteren Gedanken der Erfindung ist bei den Ausführungsformen mit mindestens zwei Hebeln die Grenze zwischen den beiden Hebeln derart geführt, daß der den den zweiten Hebel bildenden Materialbereich an seiner zum ersten Hebel weisenden Seite von dem den ersten Hebel bildenden Materialbereich trennende, in der Form der dünnen Schnittlinie ausgebildete materialfreie Bereich in seinem sich von dem die Angriffsstelle am zweiten Hebel begrenzenden Ende des die zweite Koppel von dem ersten Hebel trennenden materialfreien Bereichs aus in Richtung auf die Abstützstelle des ersten Hebels zu seinem der zweiten Koppel entgegengesetzten Ende erstreckenden Abschnitt gegenüber der Längsrichtung der beiden Hebel in einer Neigungsrichtung geführt ist, durch die sowohl der erste Hebel zur zweiten Koppel hin als auch der zweite Hebel zur ersten Koppel hin verjüngt sind. Dadurch ist die senkrecht zur Längsrichtung der beiden Hebel gesehene Materialstärke der Hebel jeweils in ihren an den Einleitungsstellen der zu untersetzenden Kraft angrenzenden Bereichen gegenüber ihren der Krafteinleitungsstelle entgegengesetzten Endbereichen vergrößert, was wegen des Nebeneinanderliegens der beiden Hebel mit entgegengesetztem Richtungssinn möglich ist. Die damit verbundene Schwächung der Materialstärke durch die Verjüngung in den den Krafteinleitungspunkten entgegengesetzten Endbereichen der Hebel bedeutet keine Festigkeitsminderung, da diese Endbereiche nur mit der untersetzten und damit kleineren Kraft belastet sind. Die stark belasteten Bereiche, an denen die zu untersetzende Kraft angreift, sind dagegen zu Lasten dieser weniger belasteten Endbereiche verstärkt, wobei für diese Verstärkung keine Erhöhung des Bauvolumens erforderlich ist.

Eine spezielle Anwendung des Erfindungsgedankens auf eine Ausführungsform mit drei Hebeln besteht darin, daß an dem der Angriffsstelle der zweiten Koppel am zweiten Hebel jenseits dessen Abstützstelle gegenüberliegenden Ende des den zweiten Hebel bildenden Materialbereichs ein von dem ersten Hebel nur durch einen in der Form der dünnen Schnittlinie ausgebildeten materialfreien Bereich getrennter, eine längssteife, biegeelastische dritte Koppel bildender Materialbereich vorgesehen ist, dessen der Angriffsstelle der dritten Koppel am zweiten Hebel entgegengesetztes Ende an einem an dem Ständer abgestützten, einen der weiteren Kraftuntersetzung dienenden starren dritten Hebel bildenden Materialbereich angreift. Durch die nur mittels der dünnen Schnittlinie von dem ersten Hebel getrennte Anordnung der an dem dritten Hebel angreifenden dritten Koppel wird also konsequent das Prinzip der maximalen Kompaktheit und minimalen Materialwegnahme für Vorrichtungen mit mindestens drei Hebeln weitergeführt. Alle drei Koppeln erstrecken sich dabei also senkrecht zu der gemeinsamen Längsrichtung der drei Hebel, wobei jede Koppel jeweils unmittelbar, nur durch die dünne Schnittlinie getrennt, an einen der Hebel angrenzt.

Dann besteht eine zweckmäßige weitere Ausgestaltung darin, daß der den die dritte Koppel und ihre Angriffsstelle am dritten Hebel bildenden Materialbereich von dem den dritten Hebel bildenden Materialbereich trennende materialfreie Bereich in der Form der dünnen Schnittlinie ausgebildet ist. Hierbei erleidet derjenige Materialbereich, der zur Bildung des mittels der dritten Koppel von der zu untersetzenden Kraft beaufschlagten Hebelarms des dritten Hebels zur Verfügung steht, an seiner zur dritten Koppel weisenden Seite nur eine minimale Materialwegnahme durch die dünne Schnittlinie, so daß dieser am stärksten belastete Bereich des dritten Hebels in seiner Festigkeit gesteigert ist.

Ähnlich dient es dem Ziel einer möglichst starken Ausbildung des am meisten belasteten Bereichs des dritten Hebels, daß in einer weiteren Ausgestaltung der den den Ständer bildenden Materialbereich von dem den dritten Hebel bildenden Materialbereich trennende materialfreie Bereich mindestens in seinem die Abstützstelle des dritten Hebels an ihrer zur dritten Koppel weisenden Seite begrenzenden Abschnitt in der Form der dünnen Schnittlinie ausgebildet ist.

Im Rahmen der Erfindung ist ferner vorgesehen, daß der den Ständer bildende Materialbereich im Inneren einer einen feststehend abstützbaren Parallelogrammschenkel, zwei zueinander im wesentlichen parallele, längssteife, biegeelastische Lenker und einen mittels der Lenker an dem feststehenden Parallelogrammschenkel parallel geführten, zur Aufnahme der zu messenden Kraft dienenden beweglichen Parallelogrammschenkel aufweisenden, einstückigen Parallelogrammführung an dem feststehenden Parallelogrammschenkel und die betreffende Angriffsstelle der dem beweglichen Parallelogrammschenkel benachbarten Koppel an dem beweglichen Parallelogrammschenkel befestigt ist. Damit ist die der Kraftuntersetzung dienende Vorrichtung baulich einfach und kompakt in die insbesondere bei Waagen vom Kraftkompensationstyp vorgesehenen Parallelogrammführungen einfügbar, wobei jedoch die einstückige Parallelogrammführung einerseits und die einstückige Kraftuntersetzungsvorrichtung andererseits getrennt ausgebildet sein können. Zumindest im Bereich der Verbindungsstelle zwischen dem Ständer und dem feststehenden Parallelogrammschenkel und der Verbindungsstelle zwischen der Koppel und dem beweglichen Parallelogrammschenkel liegen dann die miteinander zu verbindenden Teile formschlüssig aneinander und können auf einfache Weise durch eine Schraubverbindung aneinander festgelegt werden. Durch diese getrennte Ausbildung der Parallelogrammführung und der Kraftuntersetzungsvorrichtung kann insbesondere die senkrecht zur Drehebene der Hebel gemessene Materialstärke der Kraftuntersetzungsvorrichtung und der Parallelogrammführung unterschiedlich ausgebildet werden, beispielsweise durch Ausbildung der Parallelogrammführung mit gegenüber der Kraftuntersetzungsvorrichtung erheblich erhöhter Materialstärke, was für die Zwecke der Kraftaufnahme und Krafteinleitung von einer Waagschale auf den beweglichen Parallelogrammschenkel erwünscht sein kann.

Alternativ kann die Vorrichtung aber auch derart ausgeführt sein, daß der Ständer im Inneren einer einen feststehend abstützbaren Parallelogrammschenkel, zwei zueinander parallele, längssteife, biegeelastische Lenker und einen mittels der Lenker an dem feststehenden Parallelogrammschenkel parallel geführten, zur Aufnahme der zu messenden Kraft dienenden beweglichen Parallelogrammschenkel aufweisenden einstückigen Parallelogrammführung als einstückiger Materialbereich des feststehenden Parallelogrammschenkels und die betreffende Angriffsstelle der dem beweglichen Parallelogrammschenkel benachbarten Koppel mit dem beweglichen Parallelogrammschenkel einstückig zusammenhängend ausgebildet ist. Bei dieser Ausführungsform ist also die Parallelogrammführung und die Kraftuntersetzungsvorrichtung gemeinsam völlig einstückig aus einem einzigen Materialblock hergestellt.

Bei einer besonders vorteilhaften Ausführungsform dieser insgesamt einstückigen Ausbildung ist vorgesehen, daß der den den Ständer bildenden Materialbereich in seinem an die Parallelführung angrenzenden Abschnitt von dem die Parallelführung bildenden Materialbereich trennende materialfreie Bereich in der Form der dünnen Schnittlinie ausgebildet ist. Hierbei ist also zwischen dem an die Parallelführung angrenzenden Abschnitt des Ständers und der Parallelführung, insbesondere zwischen dem Ständer und einem der beiden Lenker der Parallelführung, nur der durch die dünne Schnittlinie gebildete minimale Zwischenraum vorhanden, so daß einerseits die für den Ständer verfügbare Materialmenge maximal ausgenutzt wird und andererseits der Herstellungsvorgang dadurch vereinfacht ist, daß in diesem Abschnitt zur Ausbildung des Ständers innerhalb der Parallelogrammführung nur eine einzige Schnittlinie erforderlich ist.

Ähnlich ist im Sinne einer minimalen Materialwegnahme, eines möglichst kleinen Bauvolumens, einer erhöhten Festigkeit und einfachen Herstellung in einer weiteren vorteilhaften Ausgestaltung vorgesehen, daß der den die zum beweglichen Parallelogrammschenkel benachbarte Koppel bildenden Materialbereich von dem den beweglichen Parallelogrammschenkel bildenden Materialbereich trennende materialfreie Bereich in der Form der dünnen Schnittlinie ausgebildet ist. Die zur Krafteinleitung von dem beweglichen Parallelogrammschenkel auf den einzigen Hebel oder den ersten Hebel einer mehrhebeligen Kraftuntersetzung dienende Koppel erstreckt sich also dabei längs des beweglichen Parallelogrammschenkels und ist von diesem nur durch die dünne Schnittlinie getrennt. Hierdurch ist insbesondere die bauliche Abmessung in der Längsrichtung des Hebels gesehen, also senkrecht zur Erstreckungsrichtung der Koppel, klein gehalten bzw. der für den von der Last der Koppel beaufschlagten Bereich des Hebels verfügbare Materialbereich möglichst groß.

Schließlich besteht eine weitere, der baulichen Kompaktheit, erhöhten Festigkeit und einfachen Herstellung dienende Maßnahme darin, daß der den den zur Parallelogrammführung benachbarten Hebel bildenden Materialbereich von dem die Parallelogrammführung bildenden Materialbereich trennende materialfreie Bereich in der Form der dünnen Schnittlinie ausgebildet ist. Damit ist der gesamte der Kraftuntersetzung dienende Bereich auch auf der Seite des Hebels nur durch die dünne Schnittlinie getrennt eng in den die Parallelogrammführung bildenden Bereich eingeschmiegt.

Eine im Rahmen der Erfindung vorgesehene andere zweckmäßige Ausführungsform zeichnet sich dadurch aus, daß der einstückige Materialblock Materialbereiche aufweist, die einen feststehend abstützbaren Parallelogrammschenkel, zwei zueinander parallele, längssteife, biegeelastische Lenker und einen mittels der Lenker an dem feststehenden Parallelogrammschenkel parallel geführten, zur Aufnahme der zu messenden Kraft dienenden beweglichen Parallelogrammschenkel einer Parallelogrammführung bilden, daß der Ständer durch einen sich in das Innere der Parallelogrammführung hineinerstreckenden, einstückigen Materialbereich des feststehenden Parallelogrammschenkels gebildet ist, und daß der den den Ständer bildenden Materialbereich an seiner zu dem einen Lenker weisenden Seite von dem diesen Lenker bildenden Materialbereich trennende materialfreie Bereich in der Form der dünnen Schnittlinie ausgebildet ist. Bei dieser Ausführungsform ist also der Ständer von einem der beiden Lenker der Parallelogrammführung nur durch die dünne Schnittlinie getrennt. Bei vorgegebener Bauhöhe des Materialblocks in der zur Längsrichtung der Lenker senkrechten Richtung ist damit die in dieser Richtung verfügbare Materialhöhe für den Ständer wegen der minimalen Materialwegnahme zwischen dem Ständer und dem benachbarten Lenker möglichst groß gehalten. Da die Abstützkräfte des Hebels auf den Ständer in dieser senkrechten Richtung einwirken, ist damit dem Ziel einer größtmöglichen Festigkeit des Ständers in dieser Richtung gedient.

Mit dem ähnlichen Ziel einer minimalen Materialwegnahme für eine maximale Festigkeit bzw. möglichst geringe Bauhöhe besteht eine weitere Ausgestaltung dieser Ausführungsform darin, daß der den den Hebel bildenden Materialbereich an seiner zu dem dem Ständer benachbarten einen Lenker entgegengesetzten anderen Lenker benachbarten Seite von dem den anderen Lenker bildenden Materialbereich trennende materialfreie Bereich in der Form der dünnen Schnittlinie ausgebildet ist.

Auch ist es von Vorteil, die erfindungsgemäße Ausführungsform weiterhin derart auszugestalten, daß der den die sich von ihrer Angriffsstelle am beweglichen Parallelogrammschenkel parallel dazu zu ihrer Angriffsstelle am zum beweglichen Parallelogrammschenkel weisenden Ende des Hebels erstreckende Koppel bildenden Materialbereich von dem den Ständer bildenden Materialbereich trennende materialfreie Bereich in der Form der dünnen Schnittlinie ausgebildet ist. Damit erstreckt sich die Koppel senkrecht zur Längsrichtung der Lenker und des Hebels zwischen dem beweglichen Parallelogrammschenkel und dem zu diesem weisenden Endbereich des Ständers und ist von dem Ständer nur durch die dünne Schnittlinie getrennt.

Auf der dem Ständer abgewandten Seite der Koppel wird der Gedanke der minimalen Materialwegnahme vorteilhaft dadurch angewendet, daß der den die sich von ihrer Angriffsstelle am beweglichen Parallelogrammschenkel parallel dazu zu ihrer Angriffsstelle am zum Parallelogrammschenkel weisenden Ende des Hebels erstreckende Koppel bildenden Materialbereich von dem den beweglichen Parallelogrammschenkel bildenden Materialbereich trennende materialfreie Bereich in der Form der dünnen Schnittlinie ausgebildet ist.

Dem Ziel einer möglichst großen Festigkeit zumindest der stark belasteten Teile bei möglichst geringer Baugröße dient auch die zusätzliche Maßnahme, daß der den den Hebel und seine Abstützstelle bildenden Materialbereich an deren zum Ständer weisenden Seite begrenzende materialfreie Bereich in der Form der dünnen Schnittlinie ausgebildet ist. Auch zwischen dem Hebel und dem Ständer erfolgt daher nur eine minimale Materialwegnahme, so daß in Verbindung mit den vorhergehenden Maßnahmen unter Bildung der durch die dünnen Schnittlinien hervorgerufenen minimalen Zwischenräume der Ständer einerseits minimal von einem der Lenker und andererseits minimal von dem Hebel beabstandet ist, wobei der letztgenannte Hebel seinerseits wieder minimal von dem anderen Lenker beabstandet ist.

Erfindungsgemäß kann auch diese Ausführungsform derart ausgebildet sein, daß nicht nur eine Kraftuntersetzung mit einem einzigen Hebel, sondern mindestens zwei zur Kraftuntersetzung dienende Hebel hintereinandergeschaltet sind. Eine derart ausgestaltete Ausführungsform zeichnet sich dadurch aus, daß an dem der Angriffsstelle der Koppel am zum beweglichen Parallelogrammschenkel weisenden Ende des Hebels jenseits dessen Abstützstelle gegenüberliegenden Ende des den Hebel bildenden Materialbereichs eine diesen ersten Hebel mit einem der weiteren Kraftuntersetzung dienenden, starren zweiten Hebel verbindende zweite Koppel vorgesehen ist und der den den zweiten Hebel bildenden Materialbereich von dem den ersten Hebel bildenden Materialbereich trennende materialfreie Bereich in der Form der dünnen Schnittlinie ausgebildet ist. Dabei liegen also die die beiden Hebel bildenden Materialbereiche an ihren einander zugewandten Seiten unmittelbar nebeneinander und sind dort nur durch die dünne Schnittlinie voneinander getrennt. Wiederum entstehen also keine unnötigen Materialverluste, die die Belastungsfähigkeit der beiden Hebel unnötig schwächen würden.

In diesem Zusammenhang ist es dann sehr zweckmäßig, daß der den die zweite Koppel bildenden Materialbereich von dem den zweiten Hebel bildenden Materialbereich trennende materialfreie Bereich in der Form der dünnen Schnittlinie ausgebildet ist. Die sich senkrecht zur Längsrichtung der beiden Hebel erstreckende zweite Koppel kann dabei also an ihrer zum zweiten Hebel weisenden Seite in demselben Schnittvorgang abgetrennt werden, in dem der erste Hebel gegen den Ständer abgegrenzt wird. Die zweite Koppel ist dabei ferner etwa innerhalb des für die Quererstreckung des zweiten Hebels ohnehin erforderlichen Platzbedarfs angeordnet, so daß durch das Vorhandensein der zweiten Koppel keine nennenswerte Erhöhung des Platzbedarfs in der zur Längsachse der Hebel senkrechten Richtung auftritt.

Auch an der zum feststehenden Parallelogrammschenkel weisenden Seite ist die zweite Koppel durch minimale Materialwegnahme abgrenzbar. Hierzu ist in einer zweckmäßigen Ausführungsform vorgesehen, daß der den die zweite Koppel bildenden Materialbereich an seiner dem zweiten Hebel abgewandten Seite von dem den Ständer bildenden Materialbereich trennende materialfreie Bereich in der Form der dünnen Schnittlinie ausgebildet ist.

Es ist auch sehr sinnvoll, bei diesen Ausführungsformen der Erfindung vorzusehen, daß der den den zweiten Hebel bildenden Materialbereich an dessen dem ersten Hebel abgewandter Seite von dem den Ständer bildenden Materialbereich trennende materialfreie Bereich in der Form der dünnen Schnittlinie ausgebildet ist. Ersichtlich wird auch hierdurch der in der zur Längsrichtung der Hebel und der Lenker senkrechten Richtung für den Ständer und den zweiten Hebel verfügbare Materialbereich möglichst groß gehalten, was deren Festigkeitseigenschaften förderlich ist.

Bei allen bisher erläuterten Ausführungsformen spielt neben dem Gedanken der minimalen Materialwegnahme in den die am stärksten belasteten Abschnitte trennenden materialfreien Bereichen auch die Einfachheit der Herstellung durch eine möglichst zusammenhängende Schnittführung eine Rolle, so daß die minimale Materialwegnahme durch Bildung der dünnen Schnittlinien auch dort vorteilhaft ist, wo die Belastung der einzelnen Vorrichtungsteile geringer ist. Auch im Hinblick auf diesen letzteren Vorteil ist es in einer weiteren Ausgestaltung der Erfindung zweckmäßig, daß der den den Ständer bildenden Materialbereich von dem den zweiten Hebel bildenden Materialbereich trennende materialfreie Bereich mindestens in seinem die Abstützstelle des zweiten Hebels an ihrer zur zweiten Koppel weisenden Seite begrenzenden Abschnitt und seinem daran anschließend sich bis zur Angriffsstelle der zweiten Koppel am zweiten Hebel erstreckenden Abschnitt in der Form der dünnen Schnittlinie ausgebildet ist.

Insbesondere ist die Erfindung nebst allen ihren vorstehend niedergelegten speziellen Ausführungsgedanken bei derartigen Vorrichtungen mit Vorteil anzuwenden, bei denen die Biegeelastizität jeder Koppel auf an deren beiden lokalisierten Angriffsstellen ausgebildete Biegestellen des Materialblocks konzentriert ist.

Das gleiche gilt für derartige Vorrichtungen, bei denen die Biegeelastizität der Lenker durch an den vier Ecken der Parallelogrammführung lokalisierte Biegestellen der die Lenker bildenden Materialbereiche gebildet ist.

Dabei erweist es sich als eine wichtige Maßnahme, daß die dünnen Schnittlinien zumindest im Bereich der Biegestellen jeweils durch Funkenerosion gebildet sind. Durch die Funkenerosion können die Schnittlinien nicht nur besonders dünn gemacht, sondern auch eine praktisch beliebige Formgebung erhalten werden. Im Unterschied zu vorbekannten Ausbildungen der Biegestellen, bei denen die Biegestellen zwischen benachbarten zylindrischen Bohrungen des Materialblockes ausgebildet und daher durch Segmente von Kreislinien begrenzt sind, läßt sich also durch das Funkenerodieren die Form der Biegestellen abweichend von Kreisbegrenzungen optimal wählen.

Zur leichten Durchführbarkeit des Funkenerodierverfahrens ist dann vorgesehen, daß der Materialblock für jede zusammenhängende dünne Schnittlinie eine damit in Verbindung stehende, zur Einführung eines Funkenerosionsdrahtes dienende Bohrung aufweist. Diese Bohrungen, die eine über die minimale Materialwegnahme hinausgehende Materialwegnahme darstellen, werden natürlich derart angeordnet, daß sie an denjenigen Stellen liegen, wo keine erhöhten Festigkeitsanforderungen auftreten.

Vorzugsweise ist in allen Ausführungsformen der Erfindung die geometrische Anordnung derart getroffen, daß für jeden Hebel jeweils die Angriffsstellen der Koppeln am Hebel und die Abstützstelle des Hebels auf einer zur Längsrichtung der Koppeln senkrechten, gemeinsamen Geraden liegen. Bei einer derartigen Anordnung, bei der die Kraftangriffspunkte an jedem Hebel und dessen Drehpunkt auf einer gemeinsamen Geraden liegen, treten die geringsten Meßfehler auf.

Im Rahmen der Erfindung ist auch die weitere Maßnahme vorgesehen, daß in dem Materialblock an mindestens einer der Biegestellen eine seine Materialstärke in der zur Drehebene der Hebel senkrechten Richtung verringernde Ausnehmung ausgebildet ist. Besonders bei mehrhebeligen Vorrichtungen mit hohen Kraftuntersetzungen sind die auf die nachgeschalteten Hebel einwirkenden Kräfte durch die Untersetzung schon stark vermindert, so daß die Festigkeitsanforderungen an die Biegestellen entsprechend verringert sind. Dann ist es aber auch zweckmäßig, trotz der nur geringen Auslenkungen, die die Hebel bzw. die Koppeln erfahren, dennoch die Federkonstanten der betreffenden Biegestellen weiter herabzusetzen. Durch die Materialstärkeausnehmungen des Materialblocks im Bereich dieser Biegestellen kann dies durch die damit verbundene Materialschwächung leicht bewerkstelligt werden. Dabei sind die Materialstärkeausnehmungen zweckmäßigerweise in bezug auf die Drehebene der Hebel paarweise zueinander symmetrisch in den beiden einander gegenüberliegenden Außenseiten des Materialblocks ausgebildet.

Schließlich besteht im Zusammenhang mit allen erfindungsgemäßen Ausführungsformen eine zweckmäßige Ausgestaltung darin, daß in dem die mit dem beweglichen Parallelogrammschenkel verbundene Koppel bildenden Materialbereich zwischen dessen Angriffsstellen am Parallelogrammschenkel und am Hebel eine seine Materialstärke in der zur Parallelogrammebene senkrechten Richtung verringernde Ausnehmung ausgebildet ist. Durch diese Ausnehmung, die ebenfalls zweckmäßigerweise von den beiden einander gegenüberliegenden Außenseiten des Materialblocks her in bezug auf die Drehebene der Hebel symmetrisch ausgebildet ist, wird die Biegesteifigkeit der zumeist als Zugkoppel wirkenden Koppel in der zur Drehebene der Hebel senkrechten Richtung herabgesetzt und auch deren Torsionssteifigkeit vermindert, so daß durch außermittige Einwirkungen der zu messenden Kraft auf den beweglichen Parallelogrammschenkel hervorgerufene Abweichungen an der Ausnehmung der Koppel aufgenommen und nicht auf den mit der Koppel verbundenen Hebel übertragen werden. Hierdurch wird also die Fehleranfälligkeit gegen außermittige Lasteinwirkungen verringert.

Weitere Merkmale, Einzelheiten und Vorteile der Erfindung ergeben sich aus der folgenden Beschreibung und der Zeichnung, auf deren erfindungswesentliche Offenbarung aller im Text nicht besonders erwähnten Einzelheiten ausdrücklich hingewiesen wird. Hierin zeigen:
- Fig. 1: eine Ausführungsform einer Vorrichtung zur Kraftuntersetzung, die einstückig mit einer Parallelogrammführung ausgebildet ist und zwei der Kraftuntersetzung dienende Hebel aufweist,
- Fig. 2: einen bei der Ausführungsform von Fig. 1 zur Abstützung der Magnetanordnung und des Positionsgebers eines Kraftkompensationssystems dienenden Ausleger,
- Fig. 3: einen bei der Ausführungsform von Fig. 1 zur Abstützung der Kompensationsspule des Kraftkompensationssystems dienenden Ausleger, und
- Fig. 4: eine Ansicht der in Fig. 1 dargestellten Ausführungsform im Anbauzustand der in Fig. 2 und 3 dargestellten Bestandteile des Kraftkompensationssystems,
- Fig. 5: eine seitliche Aufsicht auf eine Ausführungsform der Kraftuntersetzungsvorrichtung mit drei Hebeln,
- Fig. 6: eine zur Aufnahme der in Fig. 5 dargestellten Ausführungsform der Kraftuntersetzungsvorrichtung dienende Parallelogrammführung, und
- Fig. 7: eine zusammen mit der Parallelogrammführung einstückig ausgebildete Ausführungsform der Kraftuntersetzungsvorrichtung mit drei Hebeln.

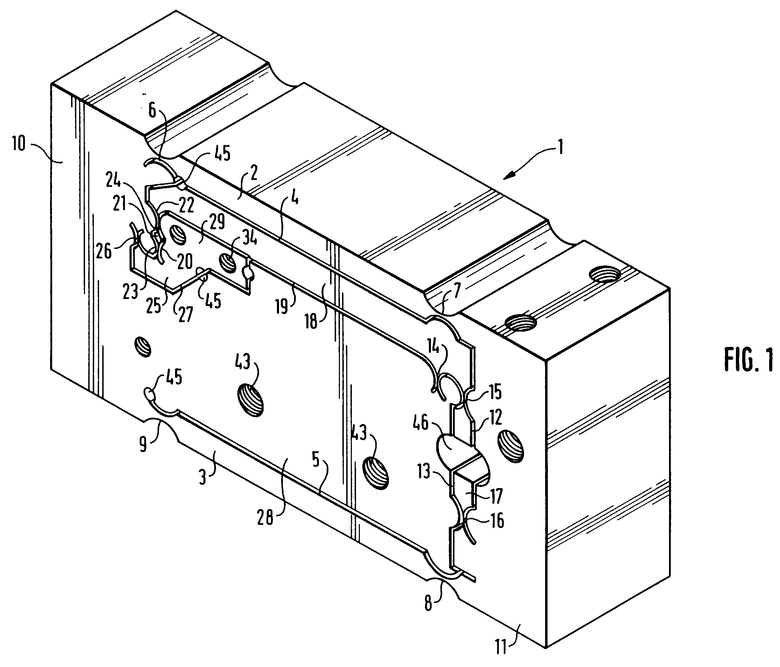

Wie aus den Fig. 1, 4, 5 und 7 hervorgeht, ist bei allen in der Zeichnung dargestellten Ausführungsformen jeweils ein einstückiger Materialblock 1 bzw. 101 in mehrere Materialbereiche unterteilt, die innerhalb des Materialblocks 1 bzw. 101 von materialfreien Bereichen begrenzt sind. Diese materialfreien Bereiche sind jeweils durch Ausnehmungen des Materialblocks 1 bzw. 101 gebildet, die denselben senkrecht zu seiner in den Figuren jeweils zum Betrachter weisenden Hauptebene vollständig durchsetzen. Wie im einzelnen nachstehend ausgeführt ist, sind diese materialfreien Bereiche zumindest in denjenigen Abschnitten, in denen die von ihnen begrenzten Materialbereiche in Richtung der Hauptebene gesehen besonders starken Kraftbelastungen unterliegen, in der Form dünner Schnittlinien ausgebildet, wie sie durch eine minimale Materialwegnahme erzielbar sind. Beispielsweise beträgt die Stärke der dünnen Schnittlinie in der Richtung der Hauptebene gemessen nur wenige Zehntel Millimeter. Derartige dünne Schnittlinien lassen sich beispielsweise durch das Verfahren der Funkenerosion mittels eines Erosionsdrahtes herstellen. Als geeignete Werkstoffe für den einstückigen Materialblock 1 bzw. 101 kommen beispielsweise Aluminiumlegierungen in Betracht, doch sind zahlreiche andere Werkstoffe denkbar, beispielsweise auch Stahllegierungen oder Verbundwerkstoffe.

Bei dem in Fig. 1 bis 4 dargestellten speziellen Ausführungsbeispiel sind zunächst zwei sich jeweils längs den beiden sich zueinander parallel erstreckenden längeren Rechteckkanten erstreckende Materialbereiche 2,3 ausgebildet, die jeweils an ihrer einen Seite von der jeweiligen Außenkante des rechteckigen Materialblocks 1 und an ihrer Innenseite durch die materialfreien Bereiche 4 bzw. 5 begrenzt sind. Die materialfreien Bereiche 4,5, die sich in der Form der dünnen Schnittlinie parallel zu den beiden längeren Rechteckkanten erstrecken, sind im Endbereich der materialfreien Bereiche 4,5 zur jeweils benachbarten Längskante des Materialblocks 1 hin konvex ausgewölbt, wobei der Materialblock 1 in Gegenüberstellung zu diesen konvexen Auswölbungen der materialfreien Bereiche 4, 5 jeweils komplementäre Einwölbungen aufweist, wodurch die zwischen jeweils einander gegenüberstehenden Einwölbungen und Auswölbungen gebildeten Dünnstellen des Materialblocks als Biegestellen 6,7,8 und 9 dienen.

Die vier Biegestellen 6,7,8 und 9 liegen innerhalb des Materialblocks 1 auf den vier Eckpunkten eines Parallelogramms, so daß der sich zwischen den Biegestellen 6 und 7 erstreckende Materialbereich 2 und der sich zwischen den Biegestellen 8 und 9 erstreckende Materialbereich 3 je einen Parallelogrammlenker bilden. Quer zur Längsrichtung der die Parallelogrammlenker bildenden Materialbereiche 2,3 erstreckt sich zwischen den Biegestellen 6 und 9 ein einen feststehenden Parallelogrammschenkel bildender Materialbereich 10, während der dem Materialbereich 10 jenseits der anderen Biegestellen 7,8 gegenüberliegende Materialbereich 11 als beweglicher Parallelogrammschenkel ausgebildet ist. Auf diesen beweglichen Parallelogrammschenkel 11 wird die zu messende Kraft, beispielsweise die Gewichtskraft eines zu wiegenden Gewichtes, in der Längsrichtung des beweglichen Parallelogrammschenkels 11, also quer zur Längsrichtung der Lenker 2,3, eingeleitet, während der gegenüberliegende feststehende Parallelogrammschenkel 10 an einem nicht dargestellten Gestell festgelegt ist.

Der den beweglichen Parallelogrammschenkel 11 bildende Materialbereich, dessen eine Begrenzung durch die sich quer zu den längeren Rechteckkanten erstreckende kürzere Rechteckkante gebildet ist, ist an seiner zum Inneren des Materialblocks 1 weisenden anderen Seite durch einen sich parallel zu dieser kürzeren Rechteckseite erstreckenden materialfreien Bereich 12 begrenzt, der ebenfalls in der Form der dünnen Schnittlinie ausgebildet ist und an zwei in einem Abstand zueinander gelegenen Stellen in Richtung auf den feststehenden Parallelogrammschenkel 10 hin konvex gewölbt ist. Während der materialfreie Bereich 12 mit der zur Biegestelle 8 hin weisenden konvexen Wölbung endet, ist er jenseits der der Biegestelle 7 zugewandten konvexen Wölbung mit dem materialfreien Bereich 4 verbunden.

Den beiden konvexen Wölbungen des materialfreien Bereichs 12 liegen zwei dazu komplementäre, zum beweglichen Parallelogrammschenkel 11 hin konvexe Wölbungen eines sich im übrigen parallel zum materialfreien Bereich 12 erstreckenden materialfreien Bereichs 13 gegenüber. Jenseits seiner zur Biegestelle 8 weisenden Wölbung setzt sich der materialfreie Bereich 13 bis zu dem den Lenker 3 begrenzenden materialfreien Bereich 5 fort, während er sich jenseits seiner zur Biegestelle 7 weisenden anderen Wölbung so weit bogenförmig fortsetzt, daß er eine als Abstützstelle für einen Hebel dienende Biegestelle 14 an deren zum beweglichen Parallelogrammschenkel 11 weisenden Seite begrenzt.

Die materialfreien Bereiche 12 und 13, zwischen deren einander paarweise gegenüberstehenden Einwölbungen jeweils Biegestellen 15,16 bildende Dünnstellen des Materialblocks 1 begrenzt sind, definieren somit zwischen sich einen eine erste Koppel 17 bildenden Materialbereich, wobei die Biegestelle 16 die Angriffsstelle der ersten Koppel 17 an dem beweglichen Parallelogrammschenkel 11 und die Biegestelle 15 deren Angriffsstelle an einem noch zu erläuternden ersten Hebel 18 bildet, der auf der an ihrer einen Seite von dem materialfreien Bereich 13 begrenzten Biegestelle 14 als Abstützstelle stehend abgestützt ist.

Dieser erste Hebel 18, der sich längs des den Lenker 2 bildenden Materialbereichs erstreckt und von diesem nur durch den als dünne Schnittlinie ausgebildeten materialfreien Bereich 4 getrennt ist, ist an seiner dem Lenker 2 entgegengesetzten Seite zwischen der die Angriffsstelle der ersten Koppel 17 bildenden Biegestelle 15 und der Biegestelle 14 durch den sich dazwischen erstreckenden Abschnitt des materialfreien Bereichs 13 von dem Materialblock 1 getrennt. Ein sich parallel zu dem materialfreien Bereich 4 erstreckender weiterer materialfreier Bereich 19, der ebenfalls in Form der dünnen Schnittlinie ausgebildet ist, trennt den ersten Hebel 18 von dem einstückigen Materialblock 1 an der der Biegestelle 15 entgegengesetzten Seite der Biegestelle 14, wobei dieser materialfreie Bereich 19 an seinem einen Ende als die Biegestelle 14 begrenzender gewölbter Bereich endet und an seinem dazu entgegengesetzten Ende in einen in der Längsrichtung des feststehenden Parallelogrammschenkels 10 verlaufenden materialfreien Bereich 20 übergeht, der ähnlich dem materialfreien Bereich 12 eine zweite Koppel 21 an ihrer zum beweglichen Parallelogrammschenkel 11 weisenden Seite begrenzt, wobei der materialfreie Bereich 20 ähnlich wie der materialfreie Bereich 12 voneinander beabstandete, zum feststehenden Parallelogrammschenkel 10 hin konvex ausgewölbte Abschnitte zur Begrenzung von Biegestellen 22,23 aufweist. Auf ihrer zum feststehenden Parallelogrammschenkel 10 weisenden Seite ist die zweite Koppel 21 durch einen in seinem Verlauf zum Verlauf des materialfreien Bereichs 20 komplementären materialfreien Bereich 24 begrenzt, der sich also ebenfalls in der Längsrichtung des feststehenden Parallelogrammschenkels 10 erstreckt und die zur Begrenzung der Biegestellen 22,23 dienenden Wölbungen aufweist. Jenseits der Biegestelle 22, die die Angriffsstelle der zweiten Koppel 21 am ersten Hebel 18 bildet, erstreckt sich der ebenfalls als dünne Schnittlinie ausgebildete materialfreie Bereich 24 bis zum materialfreien Bereich 4, in den er am zur Biegestelle 7 weisenden Ende der Biegestelle 6 einmündet.

Von der der Biegestelle 22 entgegengesetzten Biegestelle 23 aus erstreckt sich der materialfreie Bereich 24 in der Form der dünnen Schnittlinie zunächst wieder parallel zur Längsrichtung des ersten Hebels 18 und endet dann in einem mit seinem Ende zum ersten Hebel 18 hin weisenden Wölbungsbogen, der eine als Abstützstelle für einen zweiten Hebel 25 dienende Biegestelle 26 an ihrer zur zweiten Koppel 21 weisenden Seite begrenzt. Der die Biegestelle 26 an ihrer zum feststehenden Parallelogrammschenkel 10 weisenden anderen Seite von dem einstückigen Materialblock 1 begrenzende materialfreie Bereich 27 erstreckt sich von seinem die Biegestelle 26 begrenzenden gewölbten Abschnitt aus ein Stück vom ersten Hebel 18 weg in der Längsrichtung des feststehenden Parallelogrammschenkels 10 und dann parallel zur Längsrichtung des ersten Hebels 18 über die die Angriffsstelle der zweiten Koppel 21 bildende Biegestelle 23 hinaus und dann in einer Folge aus einem schräggestellten Abschnitt, einem zur Längsrichtung des ersten Hebels 18 parallelen Abschnitt und schließlich einem zur Längsrichtung des ersten Hebels 18 senkrechten Abschnitt bis zur Einmündung in den materialfreien Bereich 19.

Zwischen dem den zweiten Hebel 25 an seiner dem ersten Hebel 18 abgewandten Seite begrenzenden materialfreien Bereich 27, dem sich von dort aus zur ersten Koppel 17 erstreckenden Abschnitt des materialfreien Bereichs 19, dem die erste Koppel 17 begrenzenden materialfreien Bereich 13 und dem den Lenker 3 begrenzenden materialfreien Bereich 5 ist also ein mit dem den feststehenden Parallelogrammschenkel bildenden Materialbereich 10 einstückig zusammenhängender Materialbereich 28 begrenzt, der somit einen Ständer bildet.

Ersichtlich sind dabei der erste und zweite Hebel 18 bzw. 25 mittels der Biegestellen 14 bzw. 26 an dem Ständer 28 stehend abgestützt. Die auf den beweglichen Parallelogrammschenkel 11 ausgeübte zu messende Kraft wirkt als Zugkraft auf die damit über die Biegestelle 16 verbundene erste Koppel 17, welche ihrerseits über die Biegestelle 15 an dem ersten Hebel 18 angreift. Der erste Hebel 18 untersetzt dabei die Kraft im Verhältnis seiner durch den Abstand zwischen der Biegestelle 15 und der als Abstützstelle dienenden Biegestelle 14 einerseits sowie der Biegestelle 14 und der als Angriffsstelle der zweiten Koppel 21 dienenden Biegestelle 22 bestimmten Hebelarmlängen. Die untersetzte Kraft wird durch die unter Zug wirkende zweite Koppel 22 über die als Angriffsstelle am zweiten Hebel 25 wirkende Biegestelle 23 auf den zweiten Hebel 25 übertragen.

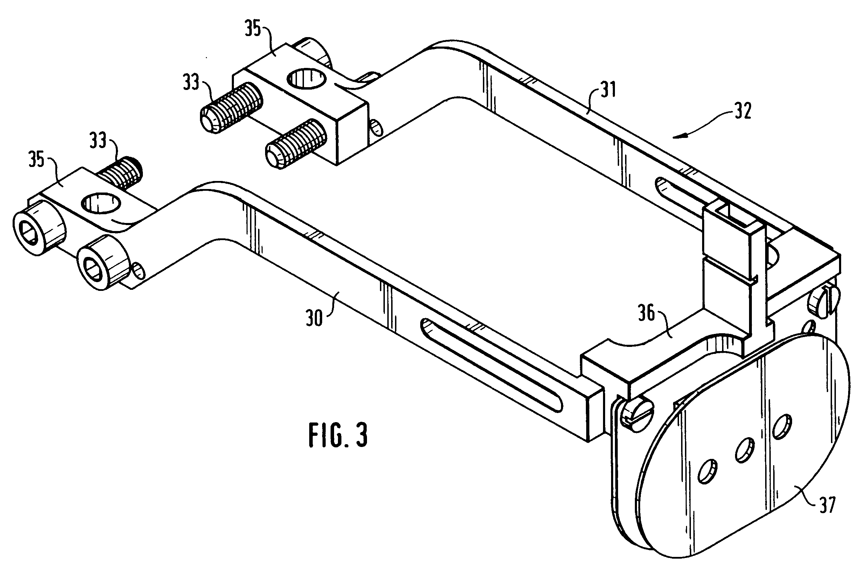

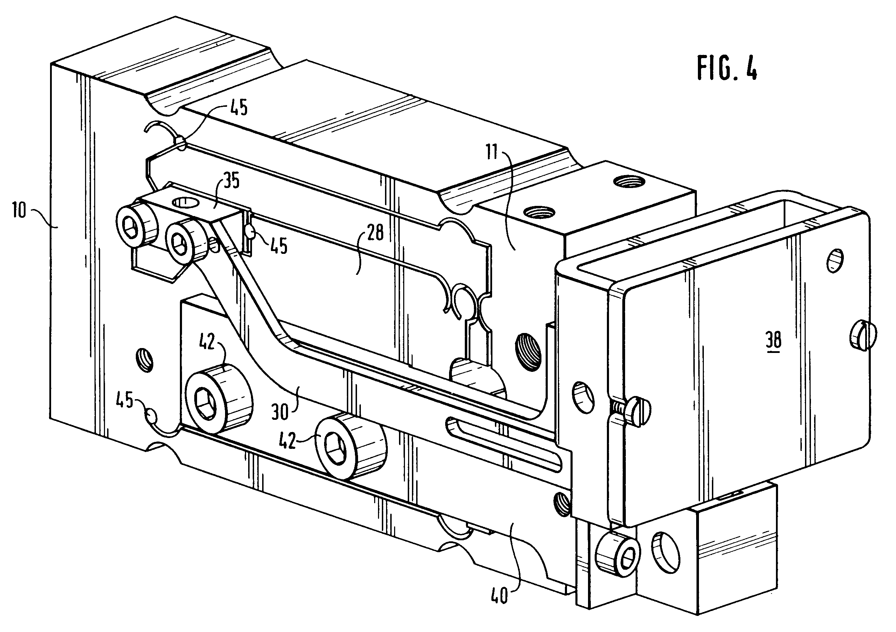

An dem der Biegestelle 26 jenseits der Biegestelle 23 entgegengesetzten freien Hebelarm 29 des zweiten Hebels 25 sind an dessen in den beiden Hauptflächen des einstückigen Materialblocks 1 gelegenen Außenseiten jeweils die freien Enden der U-Schenkel 30,31 eines in Fig. 3 dargestellten U-förmigen Auslegers 32 in der in Fig. 4 dargestellten Weise mittels Schraubbolzen 33 in Gewindebohrungen 34 des freien Hebelarms 29 festgelegt. Seitliche Abstandshalter 35 sorgen in der insbesondere aus Fig. 4 ersichtlichen Weise dafür, daß der Materialblock 1 in seinen außerhalb der Kontaktflächen der Abstandshalter 35 mit dem freien Hebelarm 29 gelegenen Bereichen mit ausreichendem seitlichen Abstand in den Innenraum des U-förmigen Auslegers 32 aufgenommen ist, damit die U-Schenkel 30,31 der Bewegung des zweiten Hebels 25 folgen können, ohne an dem Materialblock 1 zu streifen.

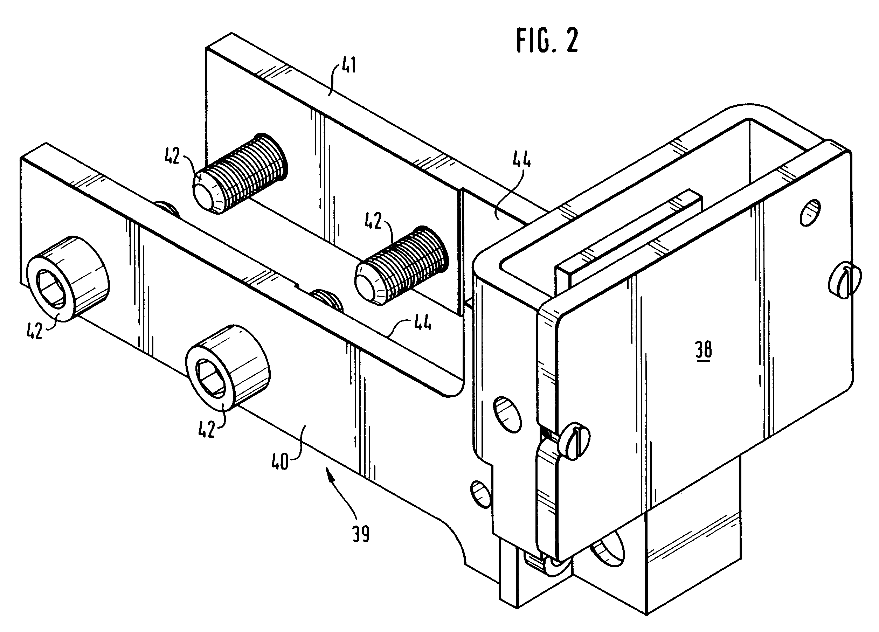

An dem die U-Schenkel 30,31 verbindenden U-Steg 36 ist eine Kompensationsspule 37 für ein Kraftkompensationssystem befestigt. Diese Kompensationsspule 37 ist mittels des Auslegers 32 in einem von einer in Fig. 2 und 4 ersichtlichen Magnetanordnung 38 erzeugten Magnetfeld aufgehängt. Der Kompensationsstrom für das die Kompensationsspule 37 und die Magnetanordnung 38 aufweisende Kraftkompensationssystem wird von einer Regelschaltung derart geregelt, daß die Kompensationsspule 37 stets in ihre Nullage zurückgeführt wird, wobei als Eingangsgröße für die Regelschaltung ein von einem Positionsgeber geliefertes Stellungssignal für die Kompensationsspule 37 dient. Der Kompensationsstrom stellt damit ein die zu messende Kraft anzeigendes Signal dar.

Wie aus Fig. 2 und 4 hervorgeht, ist die Magnetanordnung 38 sowie ein die Relativstellung der Kompensationsspule 37 in bezug auf die Magnetanordnung 38 erfassender Positionsgeber (nicht dargestellt) an einem U-förmigen Ausleger 39 im Bereich dessen U-Stegs angeordnet, während die U-Schenkel 40, 41 des Auslegers 39 von dem außerhalb des Materialblocks 1 nahe dem beweglichen Parallelogrammschenkel 11 angeordneten U-Steg aus sich längs der beiden Hauptebenen des Materialblocks 1 bis nahe zu dem feststehenden Parallelogrammschenkel 10 erstrecken. Die U-Schenkel 40,41 liegen dabei an dem den Ständer bildenden Materialbereich 28 an und sind daran mittels Schraubbolzen 42 in Gewindebohrungen 43 befestigt. An ihren zum Materialblock 1 weisenden Innenseiten sind die U-Schenkel 40,41 im Bereich des beweglichen Parallelogrammschenkels 11 jeweils mit einer gegenüber der Oberfläche des Materialblocks 1 etwas zurückspringenden Ausnehmung 44 versehen, damit der bewegliche Parallelogrammschenkel 11 seine freie Beweglichkeit gegenüber den U-Schenkeln 40,41 behält.

Durch die beiden über den Materialblock 1 auf der Seite des beweglichen Parallelogrammschenkels 11 hinausragenden Ausleger 32 und 39 für die Kompensationsspule 37 bzw. die Magnetanordnung 38 sind also diese Teile des Kraftkompensationssystems außerhalb des Materialblocks 1 auf der Seite des beweglichen Parallelogrammschenkels 11 angeordnet. Sofern sich trotz der durch die Ausbildung der materialfreien Bereiche als dünne Schnittlinien erzielten minimalen Materialwegnahme und dadurch bedingten großen Festigkeit des Ständers 28 der letztere unter hoher Last trotzdem geringfügig durchbiegen sollte, folgt der Ausleger 39 und damit die Magnetanordnung 38 dieser Verlagerung. Gleichzeitig folgt durch eine derartige Durchbiegung insbesondere auch die als Abstützstelle des zweiten Hebels 25 dienende Biegestelle 26 dieser Verlagerung, so daß die Kompensationsspule 37 wegen der Verbindung des sie tragenden Auslegers 32 mit dem zweiten Hebel 25 ebenfalls der Verlagerung folgt und damit die relative Nullage zwischen der Kompensationsspule 37 und der Magnetanordnung 38 beibehalten bleibt.

Während es vor allem darauf ankommt, die die einzelnen Teile, wie den Ständer 28 und die beiden Hebel 18,25, begrenzenden materialfreien Bereiche 4,5,19,20 und 27 jedenfalls in denjenigen Abschnitten in der Form der dünnen Schnittlinien auszubilden, in denen auf die davon begrenzten Teile die größten Belastungen einwirken, sind bei dem in Fig. 1 bis 4 dargestellten Ausführungsbeispiel diese materialfreien Bereiche insgesamt in der Form der dünnen Schnittlinien ausgeführt, was der Fertigung in einem einheitlichen Schneideprozeß, beispielsweise durch Funkenerodieren, dienlich ist. In Fig. 1 und 4 noch ersichtliche Löcher 45, die die materialfreien Bereiche an einigen Stellen erweitern, dienen lediglich zur erleichterten Einführung des Funkenerodierdrahtes, wobei diese Löcher 45 ersichtlich an Stellen angeordnet sind, wo sie keine die Festigkeit beeinflussende Materialschwächung hervorrufen.

Schließlich weist gemäß Fig. 1 die erste Koppel 17 in der Mitte ihrer Längserstreckung zwischen den Biegestellen 15 und 16 von den beiden Hauptebenen des rechteckigen Materialblocks 1 her je eine Ausnehmung 46 auf, wodurch die Materialstärke der ersten Koppel 17 senkrecht zu diesen die Parallelogrammebene bildenden Hauptebenen verringert ist. Infolge der hierdurch erzielten Biegsamkeit der ersten Koppel 17 in der zur Parallelogrammebene senkrechten Richtung werden also von der ersten Koppel 17 etwaige geringfügige Verkantungen des beweglichen Parallelogrammschenkels 11 infolge außermittiger Einleitung der zu messenden Kraft aufgenommen und nicht auf die Hebel 18,25 übertragen.

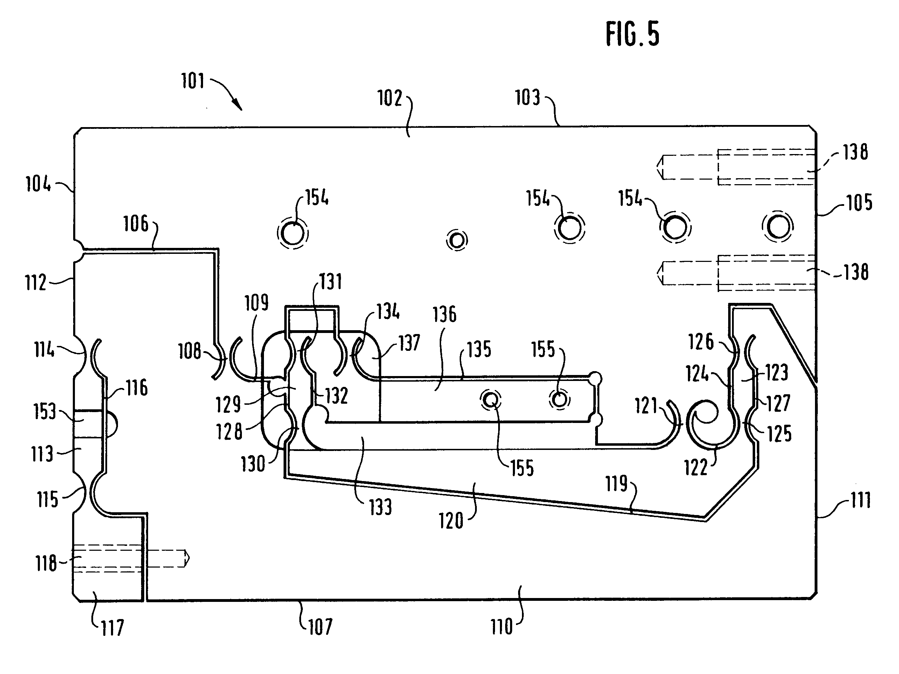

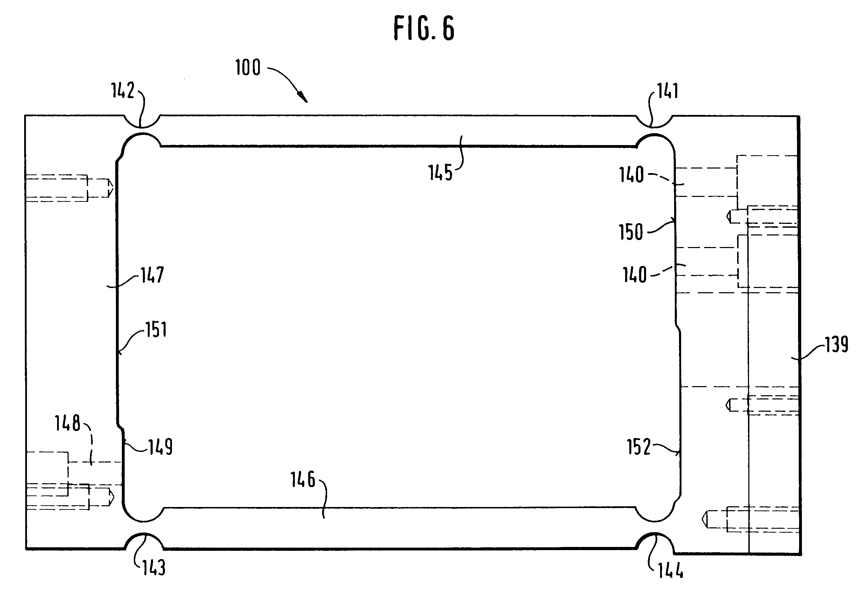

Während bei der vorstehend beschriebenen und in Fig. 1 bis 4 dargestellten Ausführungsform die Kraftuntersetzungsvorrichtung eine damit einstückig ausgebildete Parallelogrammführung aufweist und durch zwei Hebel zweistufig erfolgt, ist die in Fig. 5 dargestellte weitere Ausführungsform für eine dreistufige Kraftuntersetzung ausgebildet und zum Einbau in eine davon getrennt ausgebildete, in Fig. 6 dargestellte Parallelogrammführung 100 geeignet. Ein in Fig. 5 mit seiner Hauptebene in der Zeichnungsebene liegender quaderförmiger einstückiger Materialblock 101 weist einen als Ständer dienenden Materialbereich 102 auf, der durch die in Fig. 5 obere Kante 103 des Materialblocks, daran anschließende Abschnitte 104,105 der Seitenkanten des Materialblocks 101 und durch noch näher zu erläuternde materialfreie Bereiche des Materialblocks 101 begrenzt ist.

Ein materialfreier Bereich 106 erstreckt sich vom Ende des etwa ein Drittel der gesamten in Fig. 5 kürzeren Seitenkantenlänge einnehmenden Abschnittes 104 zunächst parallel zu der dazu senkrechten oberen Kante 103 über etwa ein Fünftel der Länge der oberen Kante 103. Von dort aus setzt sich der materialfreie Bereich 106 parallel zu dem Seitenkantenabschnitt 104 in Richtung auf die zur oberen Kante 103 parallele untere Kante 107 des Materialblocks 101 fort und endet etwa in der Mitte zwischen der oberen Kante 103 und der unteren Kante 104 in einem zum Seitenkantenabschnitt 105 hin konvex gewölbten Abschnitt, der eine Biegestelle 108 auf ihrer zum Seitenkantenabschnitt 104 weisenden Seite begrenzt. Auf ihrer anderen Seite ist die Biegestelle 108 durch einen komplementär gewölbten Abschnitt eines materialfreien Bereichs 109 von dem den Ständer bildenden Materialbereich 102 abgegrenzt, wobei sich der materialfreie Bereich 109 am zur unteren Kante 107 weisenden Enden seines die Biegestelle 108 begrenzenden Abschnittes noch ein kurzes Stück parallel zur unteren Kante 107 fortsetzt. Die Biegestelle 108 dient als hängende Abstützstelle für einen einen ersten Hebel 110 bildenden Materialbereich, welcher mittels der materialfreien Bereiche 106 und 109 von dem den Ständer bildenden Materialbereich 102 getrennt ist.

An seiner der Biegestelle 108 entgegengesetzten Seite ist der sich mit seiner Längsrichtung parallel zur unteren Kante 107 erstreckende erste Hebel 110 durch die untere Kante 107 des Materialblocks 101 begrenzt, sowie von dem in Fig. 5 rechten Ende der unteren Kante 107 aus durch den sich daran anschließenden Abschnitt 111 der zur unteren Kante 107 senkrechten Seitenkante, wobei sich der den ersten Hebel 110 begrenzende Seitenkantenabschnitt 111 etwa bis zur Mitte dieser Seitenkante zu dem dort liegenden Ende des Abschnittes 105 erstreckt.

Die in Fig. 5 linke Seitenkante, die der aus den Seitenkantenabschnitten 105 und 111 bestehenden rechten Seitenkante gegenüberliegt, begrenzt in ihrem an der Verbindungsstelle des materialfreien Bereichs 106 mit dem Seitenkantenabschnitt 104 ausgehenden Seitenkantenabschnitt 112 den ersten Hebel 110 sowie eine in dessen an den Seitenkantenabschnitt 112 angrenzenden Bereich ausgebildete erste Koppel 113. Zu diesem Zweck ist der Seitenkantenabschnitt 112 an zwei zueinander beabstandeten Stellen mit zu den Seitenkantenabschnitten 105,111 hin konvexen Einwölbungen versehen, die die Angriffsstellen der ersten Koppel 113 bildende Biegestellen an ihrer von der Außenseite des Materialblocks 101 liegenden Seite begrenzen. An seiner zum Inneren des Materialblocks 101 hin weisenden Seite ist der die erste Koppel 113 bildende Materialbereich von dem den ersten Hebel 110 bildenden Materialbereich durch einen sich parallel zu dem zwischen den Biegestellen 114,115 liegenden Teil des Seitenkantenabschnitts 112 erstreckenden materialfreien Bereich 116 getrennt, der beidseits im Anschluß an seinen parallelen Verlauf zu den Wölbungen des Seitenkantenabschnitts 114 komplementär gewölbte Abschnitte aufweist, um auf diese Weise die Biegestellen 114,115 auf ihrer zum ersten Hebel 110 weisenden Seite als Dünnstellen des Materialblocks 101 zu begrenzen. Von dem der unteren Kante 107 nächstgelegenen Ende seines gewölbten Abschnittes aus setzt sich der materialfreie Bereich 116 ein kurzes Stück parallel zur Seitenkante 107 fort und mündet dann parallel zu den Seitenkantenabschnitten 104,112 auf der unteren Kante 107 aus dem Materialblock 101 aus. Durch diesen Verlauf wird im Anschluß an die der unteren Kante 107 nächstgelegene Biegestelle 115 ein nur mittels der Biegestelle 115 mit der ersten Koppel 113 in Verbindung stehender Verankerungsbereich 117 von dem Materialblock 101 abgegrenzt, wobei dieser Verankerungsbereich 117 mit einer sich parallel zur unteren Kante 107 erstreckenden Gewindebohrung 118 versehen ist, die zur Festlegung des Verankerungsbereichs 117 an der Parallelogrammführung 100 dient.

Ein den ersten Hebel 110 an seiner der unteren Kante 107 abgewandten Seite begrenzender materialfreier Bereich 119 begrenzt gleichzeitig einen dem ersten Hebel 110 unmittelbar benachbarten zweiten Hebel 120, der an seiner dem ersten Hebel 110 abgewandten Seite an dem den Ständer 102 bildenden Materialbereich hängend abgestützt ist. Die Abstützstelle des zweiten Hebels 120 ist ebenfalls durch eine von einer Dünnstelle des Materialblocks 101 gebildete Biegestelle 121 gebildet, die nahe dem an den Seitenkantenabschnitt 111 angrenzenden Endbereich des ersten Hebels 110 gelegen ist. Auf ihrer zum Seitenkantenabschnitt 111 weisenden Seite ist die Biegestelle 121 durch einen zum Seitenkantenabschnitt 112 hin konvex gewölbten Abschnitt eines materialfreien Bereichs 122 begrenzt, der sich mit zur unteren Kante 107 hin konvexer Wölbung in einen eine zweite Koppel 123 an ihrer zum Seitenkantenabschnitt 112 hin weisenden Seite begrenzenden Abschnitt 124 fortsetzt.

Ebenso wie im Falle der ersten Koppel 113 ist der die zweite Koppel 123 begrenzende Abschnitt 124 des materialfreien Bereichs 122 abweichend von seinem im übrigen zu den Seitenkantenabschnitten 105,111 parallelen Verlauf an zwei voneinander beabstandeten Stellen mit zu den Seitenkantenabschnitten 105,111 hin konvexen Wölbungen versehen, die in der bereits für die erste Koppel 113 beschriebenen Weise als Angriffsstellen der zweiten Koppel 123 dienende Biegestellen 125,126 begrenzen. Im Anschluß an die näher an der oberen Kante 103 gelegene Biegestelle 126 setzt sich der Abschnitt 124 des materialfreien Bereichs 122 ein kurzes Stück parallel zu den Seitenkantenabschnitten 105,111 fort und dann zunächst parallel zur unteren Kante 107 sowie anschließend schräg in Richtung auf die untere Kante 107 bis zur Verbindungsstelle der Seitenkantenabschnitte 105 und 111.

Ein die zweite Koppel 123 an ihrer zu dem Seitenkantenabschnitt 111 weisenden Seite begrenzender materialfreier Bereich 127 weist einen zu dem Abschnitt 124 des materialfreien Bereichs 119 im Bereich der zweiten Koppel 123 komplementären Verlauf auf, indem er sich von einer die der oberen Kante 103 nähergelegene Biegestelle 126 begrenzenden Wölbung aus parallel zum Seitenkantenabschnitt 111 zu einer die der unteren Seitenkante 107 nähergelegene Biegestelle 125 begrenzenden komplementären Wölbung erstreckt. Von dort aus setzt sich der materialfreie Bereich 127 zunächst ein Stück parallel zum Seitenkantenabschnitt 111 und dann zum gegenüberliegenden Seitenkantenabschnitt 112 hin geneigt bis zu dem materialfreien Bereich 119 fort. Zwischen dem materialfreien Bereich 127 und dem Seitenkantenabschnitt 111 ist also ein die Querausdehnung des zwischen dem materialfreien Bereich 119 und der unteren Kante begrenzten Längsarms des ersten Hebels 110 erheblich überschreitender Endbereich des ersten Hebels 110 begrenzt, wobei die zweite Koppel 123 durch den materialfreien Bereich 127 von diesem Endbereich abgegrenzt ist.

Der zweite Hebel 120 erstreckt sich also von der die Angriffsstelle der zweiten Koppel 123 bildenden Biegestelle 125 über die als Abstützstelle dienende Biegestelle 121 hinaus in der Richtung der unteren Kante 107 bis nahe vor die als Abstützstelle des ersten Hebels 110 dienende Biegestelle 108, wobei durch einen bezüglich der Richtung der unteren Kante 107 schräggestellten Verlauf des den zweiten Hebel 120 von dem ersten Hebel 110 abgrenzenden materialfreien Bereichs 119 einerseits der zweite Hebel 120 in Richtung auf sein zur Biegestelle 108 hin weisendes Ende verjüngt und andererseits der erste Hebel 110 in Richtung auf sein an der zweiten Koppel 123 gelegenes Ende hin verjüngt ist. Da die jeweils verjüngten Arme des ersten und des zweiten Hebels 110 bzw. 120 nur mit der untersetzten Kraft beaufschlagt sind, kann dort an Stärke eingespart werden, was zu einem Stärkegewinn in denjenigen Bereichen des ersten und des zweiten Hebels 110 bzw. 120 führt, an denen über die erste bzw. zweite Zugkoppel 113,123 die zu untersetzende Kraft eingeleitet wird.

An das zur Biegestelle 108 weisende Ende des schräg zur Richtung der unteren Kante 107 verlaufenden materialfreien Bereichs 119 schließt sich ein vertikal zur unteren Kante 107, also parallel zu den Seitenkantenabschnitten 104,112 verlaufender materialfreier Bereich 128 an, in den auch das der Biegestelle 108 abgewandte Ende des materialfreien Bereichs 109 mündet. Wie im Falle der die erste Koppel 113 und die zweite Koppel 123 begrenzenden materialfreien Bereiche 116,124 und 127 begrenzt auch der materialfreie Bereich 128 eine dritte Koppel 129 an ihrer zum Seitenkantenabschnitt 112 weisenden Seite und ist mit zwei voneinander beabstandeten Abschnitten von zum Seitenkantenabschnitt 111 gerichteter konvexer Wölbung versehen, die Biegestellen 130,131 auf ihrer zur Seitenkante 112 weisenden Seite begrenzen, wobei der materialfreie Bereich 109 zwischen den Biegestellen 130,131 in den materialfreien Bereich 128 einmündet. Auf ihrer zum Seitenkantenabschnitt 111 weisenden Seite ist die dritte Koppel 129 durch einen im Bereich der dritten Koppel 129 und der Biegestellen 130,131 zu dem materialfreien Bereich 128 komplementär verlaufenden materialfreien Bereich 132 begrenzt, der - wie bereits mehrfach beschrieben - mit den die Biegestellen 130,131 auf ihrer zum Seitenkantenabschnitt 111 weisenden Seite begrenzenden, zu den gewölbten Abschnitten des materialfreien Bereichs 128 komplementären gewölbten Abschnitten versehen ist.

Während sich der materialfreie Bereich 132 von der näher an der unteren Kante 107 gelegenen und als Angriffsstelle für die dritte Koppel 129 an dem zweiten Hebel 120 dienenden Biegestelle 130 zu einem materialfreien Bereich 133 fortsetzt, der den zweiten Hebel 120 an seiner dem materialfreien Bereich 119 abgewandten Seite begrenzt und sich bis zu der als Abstützstelle für den zweiten Hebel 120 dienenden Biegestelle 121 erstreckt, welche er an ihrer zum Seitenkantenabschnitt 112 weisenden Seite von dem den Ständer bildenden Materialbereich 102 abgrenzt, setzt sich der die dritte Koppel 129 an ihrer zum Seitenkantenabschnitt 112 weisenden Seite begrenzende materialfreie Bereich 128 von der Biegestelle 131 aus zunächst ein Stück parallel zum Seitenkantenabschnitt 112 und dann ein Stück parallel zur unteren Kante 107 und dann wieder parallel zum Seitenkantenabschnitt 112 in Richtung auf die untere Kante 107 unter Ausbildung eines zum Seitenkantenabschnitt 101 hin konvex gewölbten Endabschnittes fort. Dieser gewölbte Endabschnitt begrenzt eine Biegestelle 134 an ihrer zum Seitenkantenabschnitt 112 weisenden Seite, welche sich auf ihrer dazu entgegengesetzten Seite von einem komplementär gewölbten Endabschnitt eines sich von dem gewölbten Endabschnitt aus parallel zur unteren Kante 107 bis in einen Abstand vor der als Abstützstelle für den zweiten Hebel 120 dienenden Biegestelle 121 erstreckt und dann mit einem parallelen Abschnitt in den materialfreien Bereich 133 mündet. Damit begrenzen die materialfreien Bereiche 133 und 135 zwischen sich einen dritten Hebel 136, der im übrigen von dem sich von der als Angriffsstelle für die dritte Koppel 129 an dem dritten Hebel 136 zu der als hängende Abstützstelle für den dritten Hebel 136 dienenden Biegestelle 134 erstreckenden Abschnitt des materialfreien Bereichs 128 von dem Ständer 102 abgegrenzt ist.

Da die zu messende Kraft mittels der ersten Koppel 113 in den ersten Hebel 110 an der Biegestelle 114 eingeleitet wird, ist es besonders wichtig, die materialfreien Bereiche 116 und 106 jedenfalls in ihren die Biegestellen 114 und 108 begrenzenden Abschnitten in der Form der dünnen Schnittlinien auszubilden, damit der am stärksten belastete Krafteinleitungsarm des ersten Hebels 110 ein möglichst hohes Materialvolumen aufweist. Darüber hinaus sind aber bei der in Fig. 5 dargestellten Ausführungsform auch die übrigen Abschnitte der materialfreien Bereiche 106 und 116 sowie auch die anderen materialfreien Bereiche 109,119,122,124,127,128,132 und 135, mit Ausnahme des materialfreien Bereichs 133, ausschließlich in der Form der dünnen Linien ausgebildet. Der materialfreie Bereich 133 ist lediglich in seinem zwischen dem ersten Hebel 120 und dem dritten Hebel 136 liegenden Abschnitt mit einer erheblich größeren Breite, als es die Spaltbreite der dünnen Linien ist, ausgeführt. Dies ist einerseits wegen der durch die starke Übersetzung bedingten geringen Belastung des dritten Hebels 136 ohne Festigkeitsverlust möglich und andererseits für einen derartigen Gewichtsabgleich des dritten Hebels 136 vorteilhaft, da innerhalb der gesamten Hebelanordnung zwischen der Eingangsseite und der Ausgangsseite völliges Gleichgewicht herrscht.

Aus Fig. 5 geht ferner hervor, daß für jeden der Hebel 110,120 und 136 jeweils die als Abstützstelle dienende Biegestelle 108,121 bzw. 134 mit den die Angriffsstellen der betreffenden Koppeln an dem betreffenden Hebel bildenden Biegestellen 114 und 126 bzw. 125 und 130 bzw. 131 jeweils auf einer zur unteren Kante 107 parallelen Geraden liegt. Ferner ist aus Fig. 5 ersichtlich, daß das durch das Verhältnis der Abstände zwischen einerseits der Biegestelle 108 und der Biegesteile 114 und andererseits der Biegestelle 108 und der Biegestelle 126 bestimmte Übersetzungsverhältnis des ersten Hebels 110 kleiner gewählt ist, als das Untersetzungsverhältnis des zweiten Hebels 120 und des dritten Hebels 136, von denen das Übersetzungsverhältnis des zweiten Hebels 120 durch das Verhältnis der Abstände zwischen der Biegestelle 121 und der Biegestelle 125 einerseits sowie zwischen der Biegestelle 121 und der Biegestelle 130 andererseits bestimmt ist. Durch die Beschränkung des Untersetzungsverhältnisses des ersten Hebels 110 auf einen beispielsweise unter zehn liegenden Wert, der kleiner ist als die Übersetzungsverhältnisse der anderen Hebel 120 und 136, können die Festigkeitsanforderungen im Bereich des am stärksten belasteten ersten Hebels 110 besser erfüllt werden.

Schließlich geht aus Fig. 5 noch hervor, daß in dem Materialblock 102 ausgehend von seinen beiden zur Drehebene der Hebel parallelen Hauptflächen im Bereich der Biegestellen 130,131 und 134 je eine Ausnehmung 137 ausgebildet ist, durch die die Materialstärke des Materialblocks 102 in seiner zu seinen Hauptebenen, also zur Drehebene der Hebel, senkrechten Richtung verringert wird. Diese Materialverringerung dient der Anpassung der Federkonstanten der Biegestellen 130,131 und 134, welche nur noch der durch den ersten Hebel 110 und den zweiten Hebel 120 untersetzten Kraft ausgesetzt sind.

In dem den Ständer bildenden Materialbereich 102 sind gemäß Fig. 5 von dem zur Hauptebene senkrechten Seitenkantenabschnitt 105 her zwei Gewindebohrungen 138 ausgebildet. Die in Fig. 6 dargestellte einstückige Parallelogrammführung weist in ihrem in nicht dargestellter Weise auf einem Gestell festgelegten feststehenden Parallelogrammschenkel 139 zwei mit den Gewindebohrungen 138 deckungsgleiche Durchgangsbohrungen 140 auf, mittels derer der Materialblock 102 von die Durchgangsbohrungen 140 durchsetzenden Schraubbolzen im Innenraum der Parallelogrammführung 100 an dem feststehenden Parallelogrammschenkel 139 festgelegt wird. Der mit dem feststehenden Parallelogrammschenkel 139 über Biegestellen 141 bis 144 aufweisende Parallelogrammlenker 145,146 angelenkte bewegliche Parallelogrammschenkel 147 ist mit einer mit der Gewindebohrung 118 des Verankerungsbereichs 117 der ersten Koppel 113 fluchtenden Durchgangsbohrung 148 versehen, wodurch die erste Koppel 113 durch einen Schraubbolzen an dem beweglichen Parallelogrammschenkel 147 festgelegt werden kann.

Außerhalb seiner Anlagefläche 149 an dem Verankerungsbereich 117 der ersten Koppel 113 sowie außerhalb seiner Anlagefläche 150 an der Seitenkante 105 des den Ständer bildenden Materialbereichs 102 ist jeweils die zum Parallelogramminneren weisende Fläche 151 bzw. 152 des beweglichen Parallelogrammschenkels 147 bzw. des feststehenden Parallelogrammschenkels 139 in der Parallelogrammebene gesehen geringfügig zurückversetzt, so daß für die aus dem Materialblock gebildete Kraftuntersetzung 101 ausreichend Bewegungsspielraum zur Verfügung steht. Ähnlich befinden sich die obere Kante 103 und die untere Kante 107 in einem kleinen Abstand von den diesen Kanten gegenüberstehenden Innenflächen der Parallelogrammlenker 145 und 146.

Wie schon anhand der Ausnehmung 46 bei dem in den Fig. 1 bis 4 dargestellten Ausführungsbeispiel beschrieben, weist auch die erste Koppel 113 mittig zwischen ihren Angriffsstellen 114 und 115 von den beiden Hauptebenen des Materialblocks 101 her je eine die Materialstärke senkrecht zu den Hauptebenen schwächende Ausnehmung 153 auf. In der bereits beschriebenen Weise dient diese Ausnehmung einer Entkopplung der Kraftuntersetzungsvorrichtung von etwaigen Verkantungen des beweglichen Parallelogrammschenkels 147 infolge außermittiger Lasteinwirkung.

Gewindebohrungen 154, die in dem den Ständer bildenden Materialbereich 102 gemäß Fig. 5 von seinen Hauptebenen her ausgebildet sind, dienen in der anhand des Ausführungsbeispiels von Fig. 1 bis 4 beschriebenen Weise zur Befestigung eines nicht dargestellten Auslegers, der die Magnetanordnung des Kraftkompensationssystems trägt. Ebenso ist in der bei dem Ausführungsbeispiel von Fig. 1 bis 4 beschriebenen Weise ein die Kompensationsspule tragender Ausleger mittels Schraubbolzen an Gewindebohrungen 155 des freien Hebelarms des dritten Hebels 136 befestigt. Das Übersetzungsverhältnis dieses dritten Hebels 136 ist also durch das Verhältnis der Abstände zwischen den Biegestellen 131 und 134 einerseits und der Biegestelle 134 zu dem die Kompensationsspule tragenden Ende des Auslegers andererseits bestimmt.

Schließlich sind in Fig. 5 auch noch den Einführungslöchern 45 des in Fig. 1 bis 4 dargestellten Ausführungsbeispiels entsprechende Einführungslöcher für einen zur Bildung der dünnen Schnittlinien dienenden Funkenerosionsdraht dargestellt, die nicht näher mit Bezugszeichen bezeichnet sind.

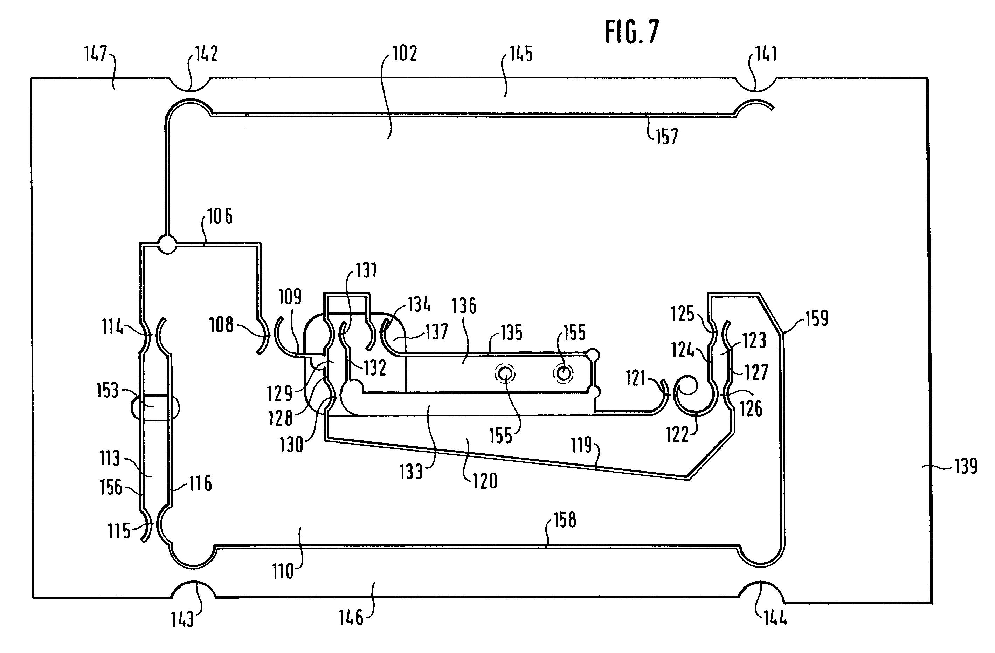

Die in Fig. 7 dargestellte Ausführungsform entspricht mit wenigen Ausnahmen der in Fig. 5 dargestellten Ausführungsform bei Einbau in die in Fig. 6 dargestellte Parallelogrammführung, so daß in Fig. 7 gleiche Teile mit den gleichen Bezugszeichen wie in Fig. 5 und 6 bezeichnet sind. Lediglich die Unterschiede sind daher nachstehend erläutert, während hinsichtlich der Übereinstimmungen auf die Beschreibung von Fig. 5 und 6 Bezug genommen wird.

Wie aus Fig. 7 hervorgeht, hängt der die Kraftuntersetzungsvorrichtung bildende Materialblock 101 von Fig. 5 einstückig mit dem feststehenden Parallelogrammschenkel 139 der Parallelogrammführung 100 von Fig. 6 zusammen, indem der den Ständer bildende Materialbereich 102 einstückig mit dem feststehenden Parallelogrammschenkel 139 zusammenhängt. Ebenso hängt die erste Koppel 113 jenseits der Verbindungsstelle 115 einstückig mit dem beweglichen Parallelogrammschenkel 147 zusammen. Anstelle des die erste Koppel 113 und einen Teilbereich des ersten Hebels 110 begrenzenden Seitenkantenabschnittes 112 von Fig. 5 ist bei der Ausführungsform von Fig. 7 ein in Form der dünnen Schnittlinie ausgebildeter materialfreier Bereich 156 vorgesehen, der den den beweglichen Schenkel 147 bildenden Materialbereich von den die Koppel 113 und den Hebel 110 bildenden Materialbereichen trennt. Ähnlich ist anstelle der in Fig. 5 ersichtlichen Begrenzung durch die obere Kante 103 und den anschließenden Seitenkantenabschnitt 104 ein in Form der dünnen Schnittlinie ausgebildeter materialfreier Bereich 157 ausgebildet, der in den materialfreien Bereich 106 mündet. Schließlich entspricht der Begrenzung des Materialblocks 101 von Fig. 5 durch den Seitenkantenabschnitt 111 und die untere Kante 107 ein bei der Ausführungsform von Fig. 7 vorgesehener materialfreier Bereich 158 in Form der dünnen Schnittlinie, welcher sich von der Biegestelle 115 bis zu der in Fig. 5 ersichtlichen Mündungsstelle des materialfreien Bereichs 122 in die die Seitenkantenabschnitte 105 und 111 aufweisende Seitenkante erstreckt, wobei dieser Mündungspunkt in Fig. 7 mit dem Bezugszeichen 159 gekennzeichnet ist.

Schließlich besteht bei der in Fig. 7 dargestellten Ausführungsform ein Unterschied zu Fig. 5 darin, daß die Magnetanordnung des Kraftkompensationssystems an dem auch den feststehenden Parallelogrammschenkel 139 abstützenden Gestell abgestützt ist, so daß die in Fig. 5 ersichtlichen Gewindebohrungen 154 für den im Ausführungsbeispiel von Fig. 5 die Magnetanordnung tragenden Ausleger nicht vorhanden sind.

Während bei der in Fig. 1 bis 4 dargestellten Ausführungsform die Abstützstellen der Hebel als Stehlager wirken, wirken sie bei der Ausführungsform von Fig. 5 bis 7 als Hängelager, was für höhere Lasten vorteilhaft ist. Bei allen Ausführungsformen wirken sämtliche Koppeln als Zugkoppeln, was ebenfalls für höhere Lasten von Vorteil ist. Es ist jedoch auch denkbar, die Koppeln derart anzuordnen, daß sie auf Druck wirksam sind.

Schon mit dreistufigen Kraftuntersetzungen, wie sie beispielsweise in den Ausführungsformen von Fig. 5 bis 6 dargestellt sind, können Untersetzungsverhältnisse im Bereich von 1 : 500 bis 1 : 1000 mit äußerst kompakter Bauweise erreicht werden. Die Genauigkeit ist dabei sehr hoch. Beispielsweise lassen sich Auflösungen von bis zu 1 Million Punkte erzielen. Lastbereiche von beispielsweise bis zu 60 kg können mit einer Bauhöhe von weniger als 90 mm erreicht werden.

## Patentansprüche

1. Vorrichtung zur Kraftuntersetzung in einer Kraftmeßeinrichtung, insbesondere einer Waage, mit mindestens einem an einem Ständer (28) abgestützten, der Kraftuntersetzung dienenden starren Hebel (18,25) und mindestens einer längssteifen, biegeelastischen Koppel (17,21), wobei der Ständer, der Hebel und die Koppel von Materialbereichen eines einstückigen Materialblocks (1) gebildet sind, die durch von den Materialblock senkrecht zur Drehebene des Hebels durchsetzenden Ausnehmungen gebildete materialfreie Bereiche (4,12,13,19,20,24,27) begrenzt sind und von denen der den Hebel bildende Materialbereich mit dem den Ständer bildenden Materialbereich nur an einer in dem Materialblock ausgebildeten, die Abstützstelle bildenden Biegestelle (14,26) und der die Koppel bildende Materialbereich mit dem den Hebel bildenden Materialbereich nur an einer in dem Materialblock ausgebildeten lokalisierten Angriffsstelle (15,23) zusammenhängt, dadurch **gekennzeichnet**, daß die materialfreien Bereiche zumindest in ihren längs der von der zu untersetzenden Kraft am stärksten belasteten Zonen der zusammenhängenden Materialbereiche sich erstreckenden Abschnitten jeweils nur durch eine den Materialblock durchtrennende dünne Schnittlinie gebildet sind.

2. Vorrichtung nach Anspruch 1, dadurch gekennzeichnet, daß der den die Koppel und ihre Angriffsstelle am Hebel bildenden Materialbereich (113,144) von dem den Hebel bildenden Materialbereich (110) trennende materialfreie Bereich (116) in der Form der dünnen Schnittlinie ausgebildet ist.

3. Vorrichtung nach Anspruch 1 oder 2, dadurch gekennzeichnet, daß der den den Ständer bildenden Materialbereich (102) von dem den Hebel bildenden Materialbereich (110) trennende materialfreie Bereich (106) mindestens in seinem die Abstützstelle (108) an ihrer zur Koppel (113) weisenden Seite begrenzenden Abschnitt in der Form der dünnen Schnittlinie ausgebildet ist.

4. Vorrichtung nach Anspruch 3, dadurch gekennzeichnet, daß der den den Hebel bildenden Materialbereich (110) von dem den Ständer bildenden Materialbereich (102) trennende materialfreie Bereich (106) in seinem sich von seinem die Abstützstelle (108) an ihrer zur Koppel (113) weisenden Seite begrenzenden Abschnitt aus zur Angriffsstelle der Koppel (113) erstreckenden Abschnitt in der Form der dünnen Schnittlinie ausgebildet ist.

5. Vorrichtung nach einem der Ansprüche 1 bis 4, bei der die Koppel eine erste Koppel zur Einleitung der zu untersetzenden Kraft in den Hebel und der Hebel einen ersten Hebel für einen der weiteren Kraftuntersetzung dienenden, dem ersten Hebel nachgeschalteten, starren zweiten Hebel darstellt, dadurch **gekennzeichnet**, daß der den den ersten Hebel bildenden Materialbereich (110) an dessen dem zweiten Hebel benachbarter Seite von dem den zweiten Hebel bildenden Materialbereich (120) trennende materialfreie Bereich (119) in der Form der dünnen Schnittlinie ausgebildet ist.

6. Vorrichtung nach Anspruch 5, dadurch gekennzeichnet, daß an dem der Angriffsstelle (114) der ersten Koppel am ersten Hebel jenseits dessen Abstützstelle (108) gegenüberliegenden Ende des den ersten Hebel bildenden Materialbereichs (110) ein davon nur durch einen in der Form der dünnen Schnittlinie ausgebildeten materialfreien Bereich (122) getrennter, eine längssteife, biegeelastische zweite Koppel bildender Materialbereich (123) vorgesehen ist, dessen der Angriffsstelle (126) der zweiten Koppel am ersten Hebel entgegengesetztes Ende an dem am Ständer abgestützten, den zweiten Hebel bildenden Materialbereich (120) angreift.

7. Vorrichtung nach Anspruch 5 oder 6, dadurch gekennzeichnet, daß der den die zweite Koppel bildenden Materialbereich (123) an dessen dem ersten Hebel abgewandter Seite von dem den Ständer bildenden Materialbereich (102) trennende materialfreie Bereich (124) in der Form der dünnen Schnittlinie ausgebildet ist.

8. Vorrichtung nach Anspruch 7, dadurch gekennzeichnet, daß der den den Ständer bildenden Materialbereich (102) von dem den ersten Hebel bildenden Materialbereich (110) trennende materialfreie Bereich in seinem sich von dem die Angriffsstelle (126) der zweiten Koppel an dem ersten Hebel an ihrer zum Ständer weisenden Seite begrenzenden materialfreien Bereich (124) aus erstreckenden Abschnitt in der Form der dünnen Schnittlinie ausgebildet ist.

9. Vorrichtung nach einem der Ansprüche 5 bis 8, dadurch gekennzeichnet, daß der den den Ständer bildenden Materialbereich (102) von dem den zweiten Hebel bildenden Materialbereich (120) trennende materialfreie Bereich (133) im Bereich der Abstützstelle (121) des zweiten Hebels jeweils in der Form der dünnen Schnittlinie ausgebildet ist.

10. Vorrichtung nach einem der Ansprüche 5 bis 9, dadurch gekennzeichnet, daß der den den zweiten Hebel bildenden Materialbereich (120) an seiner zum ersten Hebel weisenden Seite von dem den ersten Hebel bildenden Materialbereich (110) trennende, in der Form der dünnen Schnittlinie ausgebildete materialfreie Bereich (119) in seinem sich von dem die Angriffsstelle (125) am zweiten Hebel begrenzenden Ende des die zweite Koppel von dem ersten Hebel trennenden materialfreien Bereichs (127) aus in Richtung auf die Abstützstelle (108) des ersten Hebels zu seinem der zweiten Koppel entgegengesetzten Ende erstreckenden Abschnitt gegenüber der Längsrichtung der beiden Hebel in einer Neigungsrichtung geführt ist, durch die sowohl der erste Hebel zur zweiten Koppel hin als auch der zweite Hebel zur ersten Koppel hin verjüngt sind.

11. Vorrichtung nach einem der Ansprüche 5 bis 10, dadurch gekennzeichnet, daß an dem der Angriffsstelle (125) der zweiten Koppel am zweiten Hebel jenseits dessen Abstützstelle (121) gegenüberliegenden Ende des den zweiten Hebel bildenden Materialbereichs (120) ein von dem ersten Hebel nur durch einen in der Form der dünnen Schnittlinie ausgebildeten materialfreien Bereich (128) getrennter, eine längssteife, biegeelastische dritte Koppel bildender Materialbereich (129) vorgesehen ist, dessen der Angriffsstelle (130) der dritten Koppel am zweiten Hebel entgegengesetztes Ende an einem an dem Ständer abgestützten, einen der weiteren Kraftuntersetzung dienenden starren dritten Hebel bildenden Materialbereich (136) angreift.

12. Vorrichtung nach Anspruch 11, dadurch gekennzeichnet, daß der den die dritte Koppel und ihre Angriffsstelle am dritten Hebel bildenden Materialbereich (129) von dem den dritten Hebel bildenden Materialbereich (136) trennende materialfreie Bereich (132) in der Form der dünnen Schnittlinie ausgebildet ist.

13. Vorrichtung nach Anspruch 11 oder 12, dadurch gekennzeichnet, daß der den den Ständer bildenden Materialbereich (102) von dem den dritten Hebel bildenden Materialbereich (136) trennende materialfreie Bereich (128) mindestens in seinem die Abstützstelle (134) des dritten Hebels an ihrer zur dritten Koppel weisenden Seite begrenzenden Abschnitt in der Form der dünnen Schnittlinie ausgebildet ist.

14. Vorrichtung nach einem der Ansprüche 1 bis 13, dadurch gekennzeichnet, daß der den Ständer bildende Materialbereich (102) im Inneren einer einen feststehend abstützbaren Parallelogrammschenkel (139), zwei zueinander parallele, längssteife, biegeelastische Lenker (145,146) und einen mittels der Lenker an dem feststehenden Parallelogrammschenkel (139) parallel geführten, zur Aufnahme der zu messenden Kraft dienenden beweglichen Parallelogrammschenkel (147) aufweisenden, einstückigen Parallelogrammführung (100) an dem feststehenden Parallelogrammschenkel (139) und die betreffende Angriffsstelle (115) der dem beweglichen Parallelogrammschenkel benachbarten Koppel an dem beweglichen Parallelogrammschenkel (147) befestigt ist.

15. Vorrichtung nach einem der Ansprüche 1 bis 13, dadurch gekennzeichnet, daß der Ständer im Inneren einer einen feststehend abstützbaren Parallelogrammschenkel (139), zwei zueinander parallele, längssteife, biegeelastische Lenker (145,146) und einen mittels der Lenker an dem feststehenden Parallelogrammschenkel (139) parallel geführten, zur Aufnahme der zu messenden Kraft dienenden beweglichen Parallelogrammschenkel (147) aufweisenden einstückigen Parallelogrammführung als einstückiger Materialbereich (102) des feststehenden Parallelogrammschenkels (139) und die betreffende Angriffsstelle (115) der dem beweglichen Parallelogrammschenkel benachbarten Koppel mit dem beweglichen Parallelogrammschenkel (147) einstückig zusammenhängend ausgebildet ist.

16. Vorrichtung nach Anspruch 15, dadurch gekennzeichnet, daß der den den Ständer bildenden Materialbereich (102) in seinem an die Parallelführung angrenzenden Abschnitt von dem die Parallelführung bildenden Materialbereich trennende materialfreie Bereich (157) in der Form der dünnen Schnittlinie ausgebildet ist.

17. Vorrichtung nach Anspruch 15 oder 16, dadurch gekennzeichnet, daß der den die zum beweglichen Parallelogrammschenkel (147) benachbarte Koppel bildenden Materialbereich (113) von dem den beweglichen Parallelogrammschenkel bildenden Materialbereich (147) trennende materialfreie Bereich (156) in der Form der dünnen Schnittlinie ausgebildet ist.

18. Vorrichtung nach einem der Ansprüche 15 bis 17, dadurch gekennzeichnet, daß der den den zur Parallelogrammführung benachbarten Hebel bildenden Materialbereich (110) von dem die Parallelogrammführung bildenden Materialbereich trennende materialfreie Bereich (158) in der Form der dünnen Schnittlinie ausgebildet ist.

19. Vorrichtung nach Anspruch 1, dadurch gekennzeichnet, daß der einstückige Materialblock (1) Materialbereiche aufweist, die einen feststehend abstützbaren Parallelogrammschenkel (10), zwei zueinander parallele, längssteife, biegeelastische Lenker (2,3) und einen mittels der Lenker an dem feststehenden Parallelogrammschenkel (10) parallel geführten, zur Aufnahme der zu messenden Kraft dienenden beweglichen Parallelogrammschenkel (11) einer Parallelogrammführung bilden, daß der Ständer durch einen sich in das Innere der Parallelogrammführung hineinerstreckenden, einstückigen Materialbereich (28) des feststehenden Parallelogrammschenkels (10) gebildet ist, und daß der den den Ständer bildenden Materialbereich (28) an seiner zu dem einen Lenker weisenden Seite von dem diesen Lenker bildenden Materialbereich (3) trennende materialfreie Bereich (5) in der Form der dünnen Schnittlinie ausgebildet ist.

20. Vorrichtung nach Anspruch 19, dadurch gekennzeichnet, daß der den den Hebel bildenden Materialbereich (18) an seiner zu dem dem Ständer benachbarten einen Lenker (3) entgegengesetzten anderen Lenker benachbarten Seite von dem den anderen Lenker bildenden Materialbereich (2) trennende materialfreie Bereich (4) in der Form der dünnen Schnittlinie ausgebildet ist.

21. Vorrichtung nach Anspruch 19 oder 20, dadurch gekennzeichnet, daß der den die sich von ihrer Angriffsstelle (16) am beweglichen Parallelogrammschenkel (11) parallel dazu zu ihrer Angriffsstelle (15) am zum beweglichen Parallelogrammschenkel (11) weisenden Ende des Hebels erstreckende Koppel bildenden Materialbereich (17) von dem den Ständer bildenden Materialbereich (28) trennende materialfreie Bereich (13) in der Form der dünnen Schnittlinie ausgebildet ist.

22. Vorrichtung nach einem der Ansprüche 19 bis 21, dadurch gekennzeichnet, daß der den die sich von ihrer Angriffsstelle (16) am beweglichen Parallelogrammschenkel (11) parallel dazu zu ihrer Angriffsstelle (15) am zum Parallelogrammschenkel (11) weisenden Ende des Hebels erstreckende Koppel bildenden Materialbereich (17) von dem den beweglichen Parallelogrammschenkel (11) bildenden Materialbereich trennende materialfreie Bereich (12) in der Form der dünnen Schnittlinie ausgebildet ist.

23. Vorrichtung nach einem der Ansprüche 19 bis 22, dadurch gekennzeichnet, daß der den den Hebel und seine Abstützstelle (14) bildenden Materialbereich (18) an deren zum Ständer weisenden Seite begrenzende materialfreie Bereich (19) in der Form der dünnen Schnittlinie ausgebildet ist.

24. Vorrichtung nach einem der Ansprüche 19 bis 23, dadurch gekennzeichnet, daß an dem der Angriffsstelle (15) der Koppel am zum beweglichen Parallelogrammschenkel (11) weisenden Ende des Hebels jenseits dessen Abstützstelle (14) gegenüberliegenden Ende des den Hebel bildenden Materialbereichs (18) eine diesen ersten Hebel mit einem der weiteren Kraftuntersetzung dienenden, starren zweiten Hebel verbindende zweite Koppel vorgesehen ist und der den den zweiten Hebel bildenden Materialbereich (25) von dem den ersten Hebel bildenden Materialbereich (18) trennende materialfreie Bereich (19) in der Form der dünnen Schnittlinie ausgebildet ist.

25. Vorrichtung nach Anspruch 24, dadurch gekennzeichnet, daß der den die zweite Koppel bildenden Materialbereich (21) von dem den zweiten Hebel bildenden Materialbereich (25) trennende materialfreie Bereich (20) in der Form der dünnen Schnittlinie ausgebildet ist.

26. Vorrichtung nach Anspruch 24 oder 25, dadurch gekennzeichnet, daß der den die zweite Koppel bildenden Materialbereich (21) an seiner dem zweiten Hebel abgewandten Seite von dem den Ständer bildenden Materialbereich (28) trennende materialfreie Bereich (24) in der Form der dünnen Schnittlinie ausgebildet ist.

27. Vorrichtung nach einem der Ansprüche 24 bis 26, dadurch gekennzeichnet, daß der den den zweiten Hebel bildenden Materialbereich (25) an dessen dem ersten Hebel abgewandter Seite von dem den Ständer bildenden Materialbereich (28) trennende materialfreie Bereich (27) in der Form der dünnen Schnittlinie ausgebildet ist.

28. Vorrichtung nach einem der Ansprüche 24 bis 27, dadurch gekennzeichnet, daß der den den Ständer bildenden Materialbereich (28) von dem den zweiten Hebel bildenden Materialbereich (25) trennende materialfreie Bereich (24) mindestens in seinem die Abstützstelle (26) des zweiten Hebels an ihrer zur zweiten Koppel weisenden Seite begrenzenden Abschnitt und seinem daran anschließend sich bis zur Angriffsstelle (23) der zweiten Koppel am zweiten Hebel erstreckenden Abschnitt in der Form der dünnen Schnittlinie ausgebildet ist.

29. Vorrichtung nach einem der Ansprüche 1 bis 28, dadurch gekennzeichnet, daß die Biegeelastizität jeder Koppel (17,21,113,123,129) auf an deren beiden lokalisierten Angriffsstellen ausgebildete Biegestellen des Materialblocks (1,101) konzentriert ist.

30. Vorrichtung nach einem der Ansprüche 14 bis 28, dadurch gekennzeichnet, daß die Biegeelastizität der Lenker (2,3;145,146) durch an den vier Ecken der Parallelogrammführung lokalisierte Biegestellen (6 bis 8; 141 bis 144) der die Lenker bildenden Materialbereiche gebildet ist.

31. Vorrichtung nach einem der Ansprüche 1 bis 30, dadurch gekennzeichnet, daß die dünnen Schnittlinien zumindest im Bereich der Biegestellen jeweils durch Funkenerosion gebildet sind.

32. Vorrichtung nach Anspruch 31, dadurch gekennzeichnet, daß der Materialblock (1,101) für jede zusammenhängende dünne Schnittlinie eine damit in Verbindung stehende, zur Einführung eines Funkenerosionsdrahtes dienende Bohrung (45) aufweist.

33. Vorrichtung nach einem der Ansprüche 1 bis 32, dadurch gekennzeichnet, daß für jeden Hebel (18,25; 110,120, 136) jeweils die Angriffsstellen der Koppeln am Hebel und die Abstützstelle des Hebels auf einer zur Längsrichtung der Koppeln senkrechten, gemeinsamen Geraden liegen.

34. Vorrichtung nach einem der Ansprüche 1 bis 33, dadurch gekennzeichnet, daß in dem Materialblock (101) an mindestens einer der Biegestellen (130,131,134) eine seine Materialstärke in der zur Drehebene der Hebel (110,120,136) senkrechten Richtung verringernde Ausnehmung (137) ausgebildet ist.

35. Vorrichtung nach einem der Ansprüche 14 bis 34, dadurch gekennzeichnet, daß in dem die mit dem beweglichen Parallelogrammschenkel (11,147) verbundene Koppel (17,113) bildenden Materialbereich zwischen dessen Angriffsstellen am Parallelogrammschenkel und am Hebel eine seine Materialstärke in der zur Parallelogrammebene senkrechten Richtung verringernde Ausnehmung (46) ausgebildet ist.

## Claims

1. A device for reducing the force in a force-measuring apparatus, in particular in a scale, having at least one rigid lever (18, 25) supported by a stationary member (28) and serving to reduce the force, and at least one axially rigid, flexionally elastic coupling member (27, 21), in which the stationary member, the lever and the coupling member are formed by solid portions of a single-piece solid block of material (1), said solid portions being bounded by portions of no material (4, 12, 13, 19, 20, 24, 27) which are formed by cutouts extending through the solid block perpendicularly to the plane of rotation of the lever, of which the solid portion forming the lever is linked to the solid portion forming the stationary member only via a flexionally elastic domain (14, 26) formed in the solid block and representing the fulcrum, and of which the solid portion forming the coupling member is linked to the solid portion forming the lever only via a localized linkage section (15, 23) formed in the solid block, **characterized** in that each of the no-material portions is formed only by a thin line cut separating the solid block, at least in their sections extending along the zones of the linked solid portions that are stressed highest by the force to be reduced.

2. The device according to Claim 1, **characterized** in that the no-material portion (116) which separates the solid portion (113, 144) forming the coupling member and its linkage section to the lever from the solid portion (110) forming the lever is in the form of the thin line cut.

3. The device according to Claim 1 or 2, **characterized** in that the no-material portion (106) which separates the solid portion (102) forming the stationary member from the solid portion (110) forming the lever is in the form of the thin line cut, at least in its section delimiting the fulcrum (108) on the side which is directed toward the coupling member (113).

4. The device according to Claim 3, **characterized** in that the no-material portion (106) which separates the solid portion (110) forming the lever from the solid portion (102) forming the stationary member is in the form of the thin line cut in its section which extends away from the section delimiting the fulcrum (108) on the side directed toward the coupling member (113) and then to the linkage section of the coupling member (113).

5. The device according to anyone of Claims 1 to 4, wherein the coupling member represents a first coupling member for applying the force to be reduced to the lever, and the lever represents a first lever for a rigid second lever connected after the first lever and serving to further reduce the force, **characterized** in that the no-material portion (119) which separates the solid portion (110) forming the first lever on the side which is adjacent the second lever from the solid portion (120) forming the second lever is in the form of the thin line cut.

6. The device according to Claim 5, **characterized** in that a solid portion (123) which forms an axially rigid, flexionally elastic second coupling member and is separated from the solid portion (110) forming the first lever only by a no-material portion (122) in the form of the thin line cut is provided at one end of the solid portion (110) forming the first lever, said end being opposite to the linkage section (114) of the first coupling member to the first lever beyond the fulcrum (108) thereof, whose one end which is opposed to the linkage section (126) of the second coupling member to the first lever is linked to the solid portion (120) supported by the stationary member and forming the second lever.

7. The device according to Claim 5 or 6, **characterized** in that the no-material portion (124) which separates the solid portion (123) forming the second coupling member on the side that is opposed to the first lever from the solid portion (102) forming the stationary member is in the form of the thin line cut.

8. The device according to Claim 7, **characterized** in that the no-material portion which separates the solid portion (102) forming the stationary member from the solid portion (110) forming the first lever is in the form of the thin line cut in the section that extends away from the no-material portion (124) delimiting the linkage section (126) of the second coupling member to the first lever on the side which is directed toward the stationary member.

9. The device according to anyone of Claims 5 to 8, **characterized** in that the no-material portion (133) which separates the solid portion (102) forming the stationary member from the solid portion (120) forming the second lever is in the form of the thin line cut in the region of the fulcrum (121) of the second lever.

10. The device according to anyone of Claims 5 to 9, **characterized** in that the no-material portion (119), which separates the solid portion (120) forming the second lever on the side that is directed toward the first lever from the solid portion (110) forming the first lever, and which is in the form of the thin line cut, is inclined in the section that extends away from one end of the no-material portion (127) which separates the second coupling member from the first lever, said end separating the linkage section (125) to the second lever, and then toward the fulcrum (108) of the first lever to its end which is opposite to the second coupling member, at such an angle relative to the longitudinal direction of the two levers that the first lever is tapered toward the second coupling member and the second lever toward the first coupling member.

11. The device according to anyone of Claims 5 to 10, **characterized** in that a solid portion (129), which is separated from the first lever only by a no-material portion (128) in the form of the thin line cut and forms an axially rigid, flexionally elastic third coupling member, is provided at one end of the solid portion (120) which forms the second lever, said end being opposite to the linkage section (125) of the second coupling member to the second lever beyond the fulcrum (121) thereof, whose one end which is opposite to the linkage section (130) of the third coupling member to the second lever acts upon a solid portion (136) which is supported by the stationary member and forms a rigid third lever serving to further reduce the force.

12. The device according to Claim 11, **characterized** in that the no-material portion (132) which separates the solid portion (129) forming the third coupling member and its linkage section to the third lever from the solid portion (136) forming the third lever is in the form of the thin line cut.

13. The device according to Claim 11 or 12, **characterized** in that the no-material portion (128) which separates the solid portion (102) forming the stationary member from the solid portion (136) forming the third lever is in the form of the thin line cut at least in the section that delimits the fulcrum (134) of the third lever on the side that is directed toward the third coupling member.

14. The device according to anyone of Claims 1 to 13, **characterized** in that the solid portion (102) which forms the stationary member is mounted, in the interior of a single-piece parallelogram guide (100) which is comprised of a fixedly supported leg (139) of the parallelogram, two axially rigid, flexionally elastic link members (145, 146) which are parallel to each other, and a movable leg (147) of the parallelogram which is guided in parallel at the fixed leg (139) of the parallelogram by means of the link members and receives the force to be measured, to the fixed leg (139) of the parallelogram, and in that the respective linkage section (115) of the coupling member adjacent the movable leg of the parallelogram is mounted to the movable leg (147) of the parallelogram.

15. The device according to anyone of Claims 1 to 13, **characterized** in that the stationary member is formed in the interior of a single-piece parallelogram guide which is comprised of a fixedly supported leg (139) of the parallelogram, two axially rigid, flexionally elastic link members (145,146) which are parallel to each other, and a movable leg (147) of the parallelogram which is guided in parallel at the fixed leg (139) of the parallelogram by means of the link members and receives the force to be measured, as a single-piece solid portion (102) integral with the fixed leg (139) of the parallelogram, and in that the respective linkage section (115) of the coupling member adjacent the movable leg of the parallelogram is linked to the movable leg (147) of the parallelogram in one piece.

16. The device according to Claim 15, **characterized** in that the no-material portion (157) which separates the solid portion (102) forming the stationary member in its section adjacent the parallelogram guide from the solid portion forming the parallelogram guide is in the form of the thin line cut.

17. The device according to Claim 15 or 16, **characterized** in that the no-material portion (156) which separates the solid portion (113) forming the coupling member adjacent the movable leg (147) of the parallelogram from the solid portion (147) forming the movable leg of the parallelogram is in the form of the thin line cut.

18. The device according to anyone of Claims 15 to 17, **characterized** in that the no-material portion (158) which separates the solid portion (110) forming the lever adjacent the parallelogram guide from the solid portion forming the parallelogram guide is in the form of the thin line cut.

19. The device according to Claim 1, **characterized** in that the single-piece solid block (1) comprises solid portions which form a fixedly supported leg (10), two axially rigid, flexionally elastic link members (2, 3) which are parallel to each other and a movable leg (11) of a parallelogram guide, said movable leg (11) of the parallelogram being guided in parallel at the fixed leg (10) of the parallelogram by means of the link members and serving to receive the force to be measured, that the stationary member is formed by a single-piece solid portion (28) of the fixed leg (10) of the parallelogram which projects into the interior of the parallelogram guide, and in that the no-material portion (5) which separates the solid portion (28) forming the stationary member on the side that is directed toward one link member from the solid portion (3) forming said link member is in the form of the thin line cut.

20. The device according to Claim 19, **characterized** in that the no-material portion (4) which separates the solid portion (18) forming the lever on the side adjacent one link member, which link member is opposite to the other link member (3) adjacent the stationary member, from the solid portion (2) forming the one link member is in the form of the thin line cut.

21. The device according to Claim 19 or 20, **characterized** in that the no-material portion (13), which separates the solid portion (17) forming the coupling member that extends from its linkage section (16) to the movable leg (11) of the parallelogram in parallel therewith to its linkage section (15) to the one end of the lever which is directed towards the movable leg (11) of the parallelogram from the solid portion (28) forming the stationary member, is in the form of the thin line cut.

22. The device according to anyone of Claims 19 to 21, **characterized** in that the no-material portion (12), which separates the solid portion (17) forming the coupling member that extends from its linkage section (16) to the movable leg (11) of the parallelogram in parallel therewith to its linkage section (15) to the one end of the lever which is directed toward the leg (11) of the parallelogram from the solid portion forming the movable leg (11) of the parallelogram, is in the form of the thin line cut.

23. The device according to anyone of Claims 19 to 22, **characterized** in that the no-material portion (19), which delimits the solid portion (18) forming the lever and its fulcrum (14) on the side thereof that is directed toward the stationary member, is in the form of the thin line cut.

24. The device according to anyone of Claims 19 to 23, **characterized** in that a second coupling member which connects the first lever with a rigid second lever serving to further reduce the force is provided at the end of the solid portion (18) forming the lever, said end being opposite to the linkage section (15) of the coupling member to the end of the lever directed toward the movable leg (11) of the parallelogram and beyond the fulcrum (14) of the lever, and in that the no-material portion (19) separating the solid portion (25) forming the second lever from the solid portion (18) forming the first lever is in the form of the thin line cut.

25. The device according to Claim 24, **characterized** in that the no-material portion (20) which separates the solid portion (21) forming the second coupling member from the solid portion (25) forming the second lever is in the form of the thin line cut.

26. The device according to Claim 24 or 25, **characterized** in that the no-material portion (24) which separates the solid portion (21) forming the second coupling member on the side that faces away from the second lever from the solid portion (28) forming the stationary member is in the form of the thin line cut.

27. The device according to anyone of Claims 24 to 26, **characterized** in that the no-material portion (27) which separates the solid portion (25) forming the second lever on the side that faces away from the first lever from the solid portion (28) forming the stationary member is in the form of the thin line cut.

28. The device according to anyone of Claims 24 to 27, **characterized** in that the no-material portion (24) separating the solid portion (28) forming the stationary member from the solid portion (25) forming the second lever is in the form of the thin line cut, at least in its section delimiting the fulcrum (26) of the second lever on the side that is directed toward the second coupling member, and in the following section extending as far as to the linkage section (23) of the second coupling member to the second lever.

29. The device according to anyone of Claims 1 to 28, **characterized** in that the flexional elasticity of each coupling member (17, 21, 113, 123, 129) is concentrated in bending portions of the solid block (1, 101) that are formed at its two localized linkage sections.

30. The device according to anyone of Claims 14 to 28, **characterized** in that the flexional elasticity of the link members (2, 3; 145, 146) is achieved by means of bending portions (6 to 8; 141 to 144) of the solid portions forming the link members, said bending portions being located at the four corners of the parallelogram guide.

31. The device according to anyone of Claims 1 to 30, **characterized** in that each thin line cut is formed by spark erosion at least in the region of the bending portions.

32. The device according to Claim 31, **characterized** in that the solid block (1, 101) has a bore (45) for each continuous thin line cut, said bore being connected to each such line cut and serving to receive spark-erosion wire.

33. The device according to anyone of Claims 1 to 32, **characterized** in that for each lever (18, 25; 110, 120, 136) the linkage sections of the coupling members to the lever and the fulcrum of the lever are arranged on a common straight line oriented perpendicularly to the longitudinal direction of the coupling members.

34. The device according to anyone of Claims 1 to 33, **characterized** in that a recess (137) is formed in the solid block (101) at, at least, one of the bending portions (130, 131, 134), said recess (137) reducing the thickness of the solid block in the direction that is perpendicular to the plane of rotation of the levers (110, 120, 136).

35. The device according to anyone of Claims 14 to 34, **characterized** in that, in the solid portion that forms the coupling member (17, 113) which is connected with the movable leg (11, 147) of the parallelogram, there is formed a recess (46) between the linkage sections of said solid portion to the leg of the parallelogram and the lever, said recess (46) reducing the thickness of the solid portion forming said coupling member in the direction that is perpendicular to the plane of the parallelogram guide.

## Revendications

1. Dispositif servant à réduire la force dans un appareil de mesure de force, en particulier dans une balance, comportant au minimum un levier rigide (18,25) supporté par un montant (28) servant à réduire la force, ainsi qu'un élément de couplage (17,20) à raidissement longitudinal et à élasticité de flexion , le montant, le levier et l'élément de couplage étant constitués par des zones d'un bloc unique de matériau (1), lesquelles sont délimitées par des zones sans matériau sous forme d'évidements (4,12,13,19,20,24,27) traversant de part en part le bloc de matériau perpendiculairement au plan de rotation du levier et desquelles la zone de matériau constituant le levier ne coopère avec la zone de matériau constituant le montant qu'à un emplacement de flexion (14,26) réalisé dans le bloc de matériau et formant l'emplacement d'appui et la zone de matériau constituant l'élément de couplage ne coopère avec la zone de matériau constituant le levier qu'à un emplacement d'application (15,23) localisé dans le bloc de matériau, caractérisé en ce que les zones sans matériau, au moins dans leurs segments s'étendant le long des secteurs des zones de matériau contigües, ne sont respectivement constituées que par une ligne de coupe mince traversant de part en part le bloc de matériau.

2. Dispositif selon la revendication 1, caractérisé en ce que la zone sans matériau (116) séparant la zone de matériau (113, 144) qui constitue l'élément de couplage et son emplacement d'application sur le levier, de la zone de matériau (110) constituant le levier est configurée sous la forme de la ligne de coupe mince.

3. Dispositif selon la revendication 1 ou 2, caractérisé en ce que la zone sans matériau (106) séparant la zone de matériau (102), qui constitue le montant de la zone de matériau (110) constituant le levier est, au moins dans son segment délimitant l'emplacement d'appui (108) sur son côté dirigé vers l'élément de couplage (113), configurée sous la forme de la ligne de coupe mince.

4. Dispositif selon la revendication 3, caractérisé en ce que la zone de matériau (106) séparant la zone de matériau (110), qui constitue le levier, de la zone de matériau (102) constituant le montant, est, dans son segment s'étendant de son segment délimitant l'emplacement d'appui (108), sur son côté dirigé vers l'élément de couplage (113), à l'emplacement d'application de l'élément de couplage (113), configurée sous forme de la ligne de coupe mince.

5. Dispositif selon l'une des revendications 1 à 4, dans lequel l'élément de couplage présente un premier élément de couplage servant à introduire dans le levier la force à réduire et le levier un premier levier pour un deuxième levier rigide, placé après le premier, servant à la poursuite de la réduction de force, caractérisé en ce que la zone sans matériau (119) séparant, sur son côté voisin du deuxième levier, la zone de matériau (110), constituant le premier levier, de la zone de matériau (120) constituant le deuxième levier, est configurée sous forme de la ligne de coupe mince.

6. Dispositif selon la revendication 5, caractérisé en ce que, à l'extrémité de la zone de matériau (110) constituant le premier levier, extrémité opposée à l'emplacement d'application (114) du premier élément de couplage contre le premier levier, au-delà de son emplacement d'appui (108) est prévue, constituant un deuxième élément de couplage à raidissement longitudinal et à élasticité de flexion, une zone de matériau (123), qui n'est séparée de la zone de matériau (110), que par une zone sans matériau (122) réalisée sous forme de la ligne de coupe mince et dont l'extrémité, opposée à l'emplacement d'application (126) du deuxième élément de couplage sur le premier levier, vient en prise contre la zone de matériau (120) constituant le deuxième levier et appuyée sur le montant.

7. Dispositif selon la revendication 5 ou 6, caractérisé en ce que la zone sans matériau (124) séparant la zone de matériau (123) constituant le deuxième élément de couplage, sur son côté opposé au premier levier, de la zone de matériau (102) constituant le montant est configurée sous forme de la ligne de coupe mince.

8. Dispositif selon la revendication 7, caractérisé en ce que la zone sans matériau séparant la zone de matériau (102), constituant le montant, de la zone de matériau (110) constituant le premier levier, est, dans son segment s'étendant à partir de la zone sans matériau (124) délimitant, sur son côté dirigé vers le montant, l'emplacement d'application (126) du deuxième élément de couplage sur le premier levier, configurée sous forme de la ligne de coupe mince.

9. Dispositif selon l'une des revendications 5 à 8, caractérisé en ce que la zone sans matériau (133) séparant la zone de matériau (102), qui constitue le montant, de la zone de matériau (120) constituant le deuxième levier est, dans la zone de l'emplacement d'appui (121) du deuxième levier éventuellement configurée sous forme de la ligne de coupe mince.

10. Dispositif selon l'une des revendications 5 à 9, caractérisé en ce que la zone sans matériau (119), configurée sous forme de la ligne de coupe mince, séparant, sur son côté dirigé vers le premier levier, la zone de matériau (120), qui constitue le deuxième levier, de la zone de matériau (110) constituant le premier levier, est, dans son segment s'étendant à partir de l'extrémité, délimitant l'emplacement d'application (125) sur le deuxième levier, de la zone sans matériau (127) séparant le deuxième élément de couplage et le premier levier, et ce en direction de l'emplacement d'appui (108) du premier levier vers son extrémité opposée au deuxième levier, dirigée par rapport à la direction longitudinale du deuxième levier dans une direction inclinée, dans laquelle se rétrécissent aussi bien le premier levier vers le deuxième élément de couplage, que le deuxième levier vers le premier élément de couplage.

11. Dispositif selon l'une des revendications 5 à 10, caractérisé en ce qu'à l'extrémité de la zone de matériau (120) constituant le deuxième levier, extrémité opposée à l'emplacement d'application (125) du deuxième élément de couplage contre le deuxième levier au-delà de son emplacement d'appui (126), est prévue une zone de matériau (129), qui n'est séparée du premier levier que par une zone sans matériau (128) configurée sous forme de la ligne de coupe mince et qui constitue un troisième élément de couplage à raidissement longitudinal et à élasticité de flexion, zone de matériau (129) dont l'extrémité opposée à l'emplacement d'application (130) du troisième élément de couplage contre le deuxième levier vient en prise contre une zone de matériau (136) appuyée contre le montant et constituant un troisième levier rigide servant à continuer à réduire la force.

12. Dispositif selon la revendication 11, caractérisé en ce que la zone sans matériau (132) séparant la zone de matériau (129), qui constitue le troisième élément de couplage et son emplacement d'application contre le troisième levier, de la zone de matériau (136) constituant le troisième levier est configurée sous forme de la ligne de coupe mince.

13. Dispositif selon la revendication 11 ou 12, caractérisé en ce que la zone sans matériau (128) séparant la zone de matériau (102), qui constitue le montant de la zone de matériau (136) constituant le troisième levier est, au moins pour son segment délimitant l'emplacement d'application (134) du troisième levier, sur le côté de cet emplacement tourné vers le troisième élément de couplage, configurée sous forme de la ligne de coupe mince.

14. Dispositif selon l'une des revendications 1 à 13, caractérisé en ce que la zone de matériau (102) constituant le montant est, à l'intérieur d'une suspension par parallélogramme (100) d'une seule pièce, présentant un côté fixe de parallélogramme (139) pouvant s'appuyer sur un support, deux bras (145,146) à raidissement longitudinal et à élasticité de flexion, parallèles entre eux et un côté mobile de parallélogramme (147) servant à capter la force à mesurer et guidé, au moyen des bras, parallèlement au côté fixe (139) du parallélogramme, fixée au côté fixe (139) du parallélogramme et que l'emplacement d'application considéré (115) de l'élément de couplage voisin du côté mobile du parallélogramme est fixé au côté mobile (147) du parallélogramme.

15. Dispositif selon l'une des revendications 1 à 13, caractérisé en ce que le montant est, à l'intérieur d'une suspension par parallélogramme d'une seule pièce, présentant un côté fixe (139) de parallélogramme pouvant s'appuyer sur un support, deux bras (145,146) à raidissement longitudinal et à élasticité de flexion parallèles entre eux et un côté mobile (147) de parallélogramme servant à capter la force à mesurer et guidé, au moyen des bras, parallèlement au côté fixe (139) du parallélogramme, configurée comme une zone de matériau d'un seul tenant (102) du côté fixe (139) du parallélogramme et que l'emplacement d'application considéré (115) de l'élément de couplage voisin du côté mobile du parallélogramme est constitué d'une seule pièce continue avec le côté mobile (147) du parallélogramme.

16. Dispositif selon la revendication 15, caractérisé en ce que la zone sans matériau (157) séparant la zone de matériau (102), qui constitue le montant est, dans son segment délimitant la suspension par parallélogramme, de la zone de matériau constituant la suspension par parallélogramme, configurée sous forme de la ligne de coupe mince.

17. Dispositif selon la revendication 15 ou 16, caractérisé en ce que la zone sans matériau (156) séparant la zone de matériau (113), qui constitue l'élément de couplage voisin du côté mobile (147) du parallélogramme, de la zone de matériau (147) constituant le bras mobile du parallélogramme est configurée sous forme de la ligne de coupe mince.

18. Dispositif selon l'une des revendications 15 à 17, caractérisé en ce que la zone sans matériau (158) séparant la zone de matériau (110), qui constitue le levier voisin de la suspension par parallélogramme, de la zone de matériau constituant la suspension par parallélogramme est configurée sous forme de la ligne de coupe mince.

19. Dispositif selon la revendication 1, caractérisé en ce que le bloc de matériau d'un seul tenant (1) présente des zones, qui constituent une suspension par parallélogramme comportant un côté fixe (10) pouvant s'appuyer sur un support, deux bras (2,3) à raidissement longitudinal et à élasticité de flexion et un côté mobile (11) servant à capter la force à mesurer guidé, au moyen de bras, parallèlement au côté fixe (10) du parallélogramme, en ce que le montant est constitué par une zone de matériau (28) du côté fixe (10) du parallélogramme, zone d'un seul tenant s'étendant à l'intérieur de la suspension par parallélogramme et en ce que la zone sans matériau (5) séparant la zone de matériau (28), qui constitue le montant, sur son côté dirigé vers l'un des bras, et la zone de matériau (3) constituant ce bras est configurée sous forme de la ligne de coupe mince.

20. Dispositif selon la revendication 19, caractérisé en ce que la zone sans matériau (4) séparant la zone de matériau (18), qui constitue le levier, sur son côté, qui est opposé à l'un des bras (3) voisin du montant et qui est voisin de l'autre bras, et la zone de matériau (2) constituant l'autre bras est configurée sous forme de la ligne de coupe mince.

21. Dispositif selon la revendication 19 ou 20, caractérisé en ce que la zone sans matériau (13) séparant la zone de matériau (17), qui constitue l'élément de couplage, s'étendant de son emplacement d'application (16) sur le côté mobile (11) du parallélogramme et parallèlement à lui, à son emplacement d'application (15) contre l'extrémité du levier dirigée vers le côté mobile (11) du parallélogramme, de la zone de matériau (28) constituant le montant est configurée sous forme de la ligne de coupe mince.

22. Dispositif selon les revendications 19 à 21, caractérisé en ce que la zone sans matériau (12) séparant la zone de matériau (17), qui constitue l'élément de couplage s'étendant de son emplacement d'application (16) sur le côté mobile (11) du parallélogramme, et parallèlement à lui, à son emplacement d'application (15) à l'extrémité du levier dirigée vers le côté du parallélogramme (11), et la zone de matériau constituant le côté mobile (11) du parallélogramme est configurée sous forme de la ligne de coupe mince.

23. Dispositif selon l'une des revendications 19 à 22, caractérisé en ce que la zone sans matériau (19) délimitant la zone de matériau (18), qui constitue le levier et son emplacement d'application (14), sur son côté dirigé vers le montant est configurée sous forme de la ligne de coupe mince.

24. Dispositif selon les revendications 19 à 23, caractérisé en ce qu'à l'extrémité de la zone de matériau (18), qui constitue le levier, extrémité opposée à l'emplacement d'application (15) de l'élément de couplage contre l'extrémité du levier dirigée vers le côté mobile (11) du parallélogramme et au-delà de l'emplacement d'appui (14) de ce levier, est prévu un deuxième élément de couplage reliant ce premier levier à un deuxième levier rigide servant à continuer à réduire la force et en ce que la zone sans matériau (19) séparant la zone de matériau (25), qui constitue le deuxième levier, et la zone de matériau (18) constituant le premier levier est configurée sous forme de la ligne de coupe mince.

25. Dispositif selon la revendication 24, caractérisé en ce que la zone sans matériau (20) séparant la zone de matériau (21), qui constitue le deuxième élément de couplage, et la zone de matériau (25) constituant le deuxième levier est configurée sous forme de la ligne de coupe mince.

26. Dispositif selon la revendication 24 ou 25, caractérisé en ce que la zone sans matériau (24) séparant la zone de matériau (21), qui constitue le deuxième élément de couplage, à son côté opposé au deuxième levier, et la zone de matériau (28) constituant le montant est configurée sous forme de la ligne de coupe mince.

27. Dispositif selon l'une des revendications 24 à 26, caractérisé en ce que la zone sans matériau (27) séparant la zone de matériau (25), qui constitue le deuxième levier, sur le côté de cette dernière zone opposée au premier levier, et la zone de matériau (28) constituant le montant est configurée sous forme de la ligne de coupe mince.

28. Dispositif selon l'une des revendications 24 à 27, caractérisé en ce que la zone sans matériau (24) séparant la zone de matériau (28), qui constitue le montant, de la zone de matériau (25) constituant le deuxième levier est, au minimum sur son segment délimitant l'emplacement d'appui (26) du deuxième levier contre son côté dirigé vers le deuxième élément de couplage et dans son segment s'y raccordant et s'étendant jusqu'à l'emplacement d'application (23) du deuxième élément de couplage contre le deuxième levier, configurée sous forme de la ligne de coupe mince.

29. Dispositif selon l'une des revendications 1 à 28, caractérisé en ce que l'élasticité en flexion de chacun des éléments de couplage (17,21;113,123,129) est concentrée aux joints de flexion du bloc de matériau (1;101) réalisés aux deux emplacements d'application localisés de ces éléments.

30. Dispositif selon l'une des revendications 14 à 28, caractérisé en ce que l'élasticité en flexion des bras (2,3;145,146) est réalisée par des points de flexion (6 à 8;141 à 144) des zones de matériau constituant les bras, joints de flexion localisés aux quatre angles de la suspension par parallélogramme.

31. Dispositif selon l'une des revendications 1 à 30, caractérisé en ce que les lignes de coupe minces sont, du moins dans la zone des points de flexion, respectivement réalisées par électro-érosion.

32. Dispositif selon la revendication 31, caractérisé en ce que le bloc de matériau (1;101) présente, pour chaque ligne de coupe continue, un alésage (45) qui lui est relié, servant a l'introduction d'un fil pour électro-érosion.

33. Dispositif selon l'une des revendications 1 à 32, caractérisé en ce que, pour chaque levier (18,25;110,120,136), les emplacements d'application respectifs des éléments de couplage se situent sur le levier et les emplacements d'appui du levier sur une ligne commune perpendiculaire à la direction longitudinale des éléments de couplage.

34. Dispositif selon l'une des revendications 1 à 33, caractérisé en ce que dans le bloc de matériau (101), contre l'un au moins des points de flexion (130,131,134), est configuré un évidement (137) réduisant l'épaisseur de matériau du bloc, dans la direction perpendiculaire au plan de rotation du levier (110,120, 136).

35. Dispositif selon l'une des revendications 14 à 34, caractérisé en ce que dans la zone de matériau, qui constitue l'élément de couplage (17;113), reliée au côté mobile (11;147) du parallélogramme et qui est comprise entre ses emplacements d'application sur le côté du parallélogramme et sur le levier, est configuré un évidement (46) réduisant son épaisseur de matériau, dans la direction perpendiculaire au plan du parallélogramme.
